# EUROPEAN PATENT APPLICATION

(11) **EP 4 716 269 A1**
(43) Date of publication of application: **25.03.2026**
(21) Application number: 24883742.9
(22) Date of filing: 28.02.2024
(51) Int. Cl.: H04W 12/06

(54) **MASTER AUTHENTICATION METHODS FOR USER EQUIPMENT (UE), ELECTRONIC DEVICE AND STORAGE MEDIUM**

(30) Priority: 30.10.2023 CN 202311429362
(71) Applicant: ZTE Corporation, Shenzhen, Guangdong 518057 (CN)
(72) Inventor: LIU, Peilin, Shenzhen, Guangdong 518057 (CN); LIANG, Shuang, Shenzhen, Guangdong 518057 (CN); YOU, Shilin, Shenzhen, Guangdong 518057 (CN); LIU, Yuze, Shenzhen, Guangdong 518057 (CN); XING, Zhen, Shenzhen, Guangdong 518057 (CN); ZHANG, Leyi, Shenzhen, Guangdong 518057 (CN); MA, Wei, Shenzhen, Guangdong 518057 (CN)
(74) Representative: Vossius & Partner Patentanwälte Rechtsanwälte mbB
(86) International application number: PCT/CN2024/079039
(87) International publication number: WO 2025/091725

(57) **Abstract**

Provided are a primary authentication method for a user equipment (UE), an electronic device and a storage medium that relate to the field of communication technology. The primary authentication method for a UE includes receiving (S301) a primary re-authentication request message sent by a second network element, where the primary re-authentication request message carries a UE identifier; acquiring (S302) the state of a corresponding UE according to the UE identifier; determining (S303) response indication information according to the state of the UE; and sending (S304) a primary re-authentication response message carrying the response indication information to the second network element to enable the second network element to perform a corresponding operation according to the response indication information.

## Description

### CROSS-REFERENCE TO RELATED APPLICATIONS

The present application claims priority to Chinese Patent Application No. 202311429362.8 filed on Oct. 30, 2023, the disclosure of which is incorporated herein by reference in its entirety.

### TECHNICAL FIELD

Embodiments of the present application relate to the field of communication technology and, in particular, to a primary authentication method for a user equipment (UE), an electronic device and a storage medium.

### BACKGROUND

During the network registration process, a UE sends a registration request to a home network via a network element of a visited network. After receiving the registration request from the UE, a network element of the home network determines, according to an event or an authentication policy of the network element of the home network, whether to perform a primary authentication procedure triggered by the home network. When triggering the primary authentication procedure, the home network sends a primary re-authentication request to the network element of the visited network. However, after the network element of the visited network receives the primary re-authentication request, the UE might be in a specific scenario, which may cause authentication failure when the network element of the home network or the network element of the visited network performs an operation based on the original policy, thus affecting network service quality and degrading user experience. When the UE is in a specific scenario, how to trigger the primary authentication procedure is a technical problem to be solved currently.

### SUMMARY

Embodiments of the present application provide a primary authentication method for a UE, an electronic device, and a storage medium.

In a first aspect, an embodiment of the present application provides a primary authentication method for a UE, and the method is applied to a first network element. The method includes the following: a primary re-authentication request message sent by a second network element is received, where the primary re-authentication request message carries a UE identifier; a UE is determined according to the UE identifier and a state of the UE is acquired; response indication information is determined according to the state of the UE; and a primary re-authentication response message carrying the response indication information is sent to the second network element to enable the second network element to perform a corresponding operation according to the response indication information.

In a second aspect, an embodiment of the present application provides a primary authentication method for a UE, and the method is applied to a second network element. The method includes the following: a primary re-authentication request message carrying a UE identifier is sent to a first network element to enable the first network element to determine a UE according to the UE identifier and determine response indication information according to the state of the UE; a primary re-authentication response message sent by the first network element is received, where the primary re-authentication response message carries the determination response indication information; and a corresponding operation is performed according to the response indication information.

In a third aspect, an embodiment of the present application provides an electronic device. The electronic device includes one or more processors and a memory storing one or more programs. When executed by the one or more processors, the one or more programs cause the one or more processors to implement the primary authentication method for the UE described in the first aspect or the primary authentication method for the UE described in the second aspect.

In a fourth aspect, an embodiment of the present application provides a computer-readable storage medium for storing a computer program. When the program is executed by a processor, the primary authentication method for the UE described in the first aspect or the primary authentication method for the UE described in the second aspect is implemented.

### BRIEF DESCRIPTION OF DRAWINGS

The drawings are used to provide a further understanding of the technical solution of the present application and constitute a part of the specification. In conjunction with embodiments of the present application, the drawings are intended to illustrate and not to limit the technical solution of the present application.
FIG. 1 is a schematic diagram of a network system architecture according to an embodiment of the present application.
FIG. 2 is a schematic diagram of the network system architecture according to another embodiment of the present application.
FIG. 3 is a flowchart of a primary authentication method for a UE according to an embodiment of the present application.
FIG. 4 is a flowchart of a primary authentication method for a UE according to another embodiment of the present application.
FIG. 5 is a flowchart of a primary authentication method for a UE in some cases.
FIG. 6 is a flowchart of a primary authentication method for a UE according to another embodiment of the present application.
FIG. 7 is a flowchart of a primary authentication method for a UE according to another embodiment of the present application.
FIG. 8 is a flowchart of a primary authentication method for a UE according to another embodiment of the present application.
FIG. 9 is a flowchart of a primary authentication method for a UE according to another embodiment of the present application.
FIG. 10 is a flowchart of a primary authentication method for a UE according to another embodiment of the present application.
FIG. 11 is a flowchart of a primary authentication method for a UE according to another embodiment of the present application.
FIG. 12 is a flowchart of a primary authentication method for a UE according to another embodiment of the present application.
FIG. 13 is a flowchart of a primary authentication method for a UE according to another embodiment of the present application.
FIG. 14 is a flowchart of a primary authentication method for a UE according to another embodiment of the present application.
FIG. 15 is a device structure diagram of an electronic device according to an embodiment of the present application.

### DETAILED DESCRIPTION

To make the objectives, technical solutions, and advantages of the present application clearer, the following describes the present application in detail in conjunction with the drawings and embodiments. It is to be understood that embodiments described herein are merely intended to explain the present application and not to limit the present application.

It should be understood that in the description of embodiments of the present application, "first", "second", and the like are described only for the purpose of distinguishing technical features and cannot be understood as indicating or implying relative importance, implying the number of indicated technical features, or implying the sequential relationship of indicated technical features. "At least one" refers to one or more. "Multiple" refers to two or more than two. "And/or" describes the association relationship of association objects and indicates that three kinds of relationships may exist. For example, A and/or B may indicate that A exists alone, that A and B exist at the same time, and that B exists alone. A and B may each be singular or plural. The character "/" generally indicates an "or" relationship between associated objects before and after the character. "At least one of the following items" or a similar expression refers to any combination of these items, including any combination of a single item or multiple items. For example, at least one of a, b, or c may refer to a, b, c, a and b, a and c, b and c, or a and b and c, where a, b, and c may each be singular or plural.

In addition, if not in conflict, technical features involved in different embodiments described below of the present application may be combined with each other.

The primary authentication method for the UE provided in embodiments of the present application may be applied to various communication systems, for example, a 5G communication system or various communication systems in the future.

The network architecture and service scenarios described in embodiments of the present application are intended to more clearly explain the technical solutions of embodiments of the present application and do not limit the technical solutions provided in embodiments of the present application. It can be seen by those of ordinary skills in the art that with the evolution of the network architecture and the emergence of new service scenarios, the technical solutions provided in embodiments of the present application are equally applicable to similar technical problems.

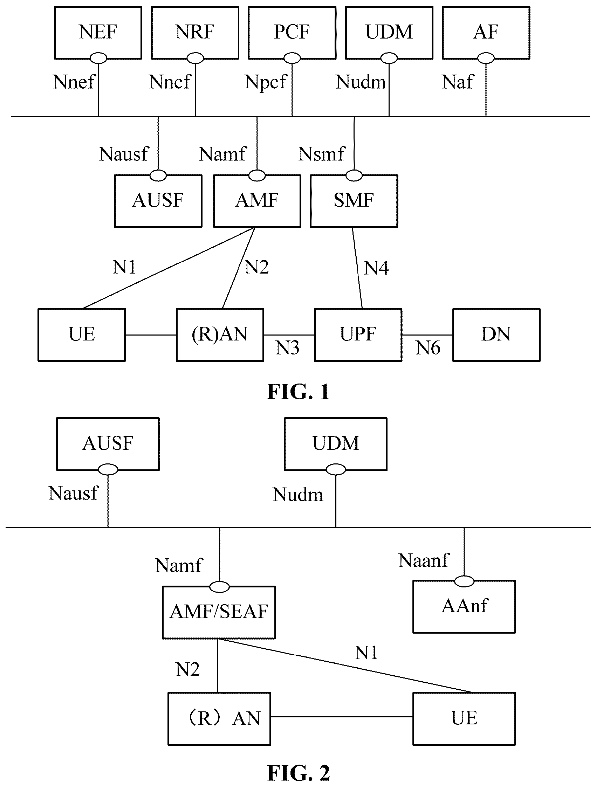

Before the technical solutions in embodiments of the present application are introduced, the network architecture in embodiments of the present application is described first. Referring to FIG. 1, FIG. 1 is a schematic diagram of a network system architecture according to an embodiment of the present application. As shown in FIG. 1, the network architecture consists of a UE, a radio access network (RAN), and an operator network. The operator network includes a core network (CN) and a data network (DN). The UE accesses the operator network through the RAN. As a bearer network, the CN provides an interface to the DN and provides a communication connection, authentication, management, policy control, and a data service bearing for the UE. The CN includes an access and mobility management function (AMF), a security anchor function

(SEAF), a session management function (SMF), a user plane function (UPF), an authentication server function (AUSF), a unified data manager (UDM) function, a network exposure function (NEF), an application function (AF), a network slice selection function (NSSF), a policy control function (PCF), and a network function repository function (NRF). In FIG. 1, N1, N2, N3, N4, and N6 denote interfaces between corresponding network elements. Namf, Nsmf, Nausf, Nudm, Nnef, Npcf, Naf, Nnssf, and Nnrf are the servicization exhibited by the AMF, the SMF, the AUSF, the UDM, the NEF, the PCF, the AF, the NSSF, and the NRF, respectively.

Referring to FIG. 2, FIG. 2 illustrates network elements and connection relationships mainly related to embodiments of the present application in the network architecture shown in FIG. 1, including the UE, the AMF, the UDM, and a network function (NF). The UE includes a handheld device, a vehicle-mounted device, a wearable device, or a computing device having a wireless communication function. In some embodiments, the UE may be a mobile phone, a tablet computer, or a computer with a wireless transceiver function. The terminal device may also be, for example, a virtual reality (VR) terminal device, an augmented reality (AR) terminal device, a wireless terminal in industrial control, a wireless terminal in unmanned driving, a wireless terminal in telemedicine, a wireless terminal in a smart grid, a wireless terminal in a smart city, and a wireless terminal in a smart home. The UE communicates with the AMF through the N1 interface or communicates with the AMF through the RAN and the N2 interface. The AMF is responsible for the access management and mobility management of the terminal, for example, registration management, connection management, mobility management, and accessibility management. In practical applications, the AMF includes a mobility management function in a mobility management entity (MME) in a network framework of a long-term evolution (LTE) system and adds an access management function. Additionally, the SEAF provides a primary authentication service. In the current standard definition, the SEAF and the AMF are merged. The Namf is a service-oriented interface provided by the AMF. The UDM is a control plane network element provided by an operator and is responsible for generating an authentication parameter and storing, for example, a subscriber permanent identifier (SUPI), registration information, a credential, and subscription data of the operator network. The Nudm is a service-oriented interface provided by the UDM. Additionally, an authentication credential repository and processing function (ARPF) is located in the UDM and is used for generating an authentication parameter. The NF is a software module or entity in the network and is used for performing a specific network task or function. The access and mobility management function (AAnf) is an NF in the core network and is responsible for managing the mobility of the UE, including the handover, redirection, and registration of the UE. Naanf is a service interface provided by the AAnf. The AUSF is a control plane network element provided by the operator and may be used for the authentication of a network subscriber by the operator network. The Nausf is a service-oriented interface provided by the AUSF. The AMF/SEAF and the AUSF may be located in the same network. For example, both the AMF/SEAF and the AUSF are located in a home public land mobile network (HPLMN), referred to as a home network for short. The AMF/SEAF and the AUSF may also be located in different networks. For example, the SEAF/AMF is located in a visited public land mobile network (VPLMN), referred to as a visited network for short, and the AUSF is located in the home network. If the UE is outside the coverage range of the home network, the UE cannot access the home network directly to acquire a service. In this case, if the UE is inside the coverage range of the visited network, the UE needs to access the coverage range of the visited network to acquire network services provided by the visited network and the home network.

During the network registration process, a UE sends a registration request to the home network via a network element of the visited network. After receiving the registration request from the UE, a network element of the home network determines, according to an event or an authentication policy of the network element of the home network, whether to perform a primary authentication procedure triggered by the home network. In the process of triggering the primary authentication procedure, the home network sends a primary re-authentication request to the network element of the visited network. However, after the network element of the visited network receives the primary re-authentication request, the UE might be in a specific scenario, which may cause authentication failure when the network element of the home network or the network element of the visited network performs an operation based on the original policy, thus affecting network service quality and degrading user experience. When the UE is in a specific scenario, how to trigger the primary authentication procedure is a technical problem to be solved currently.

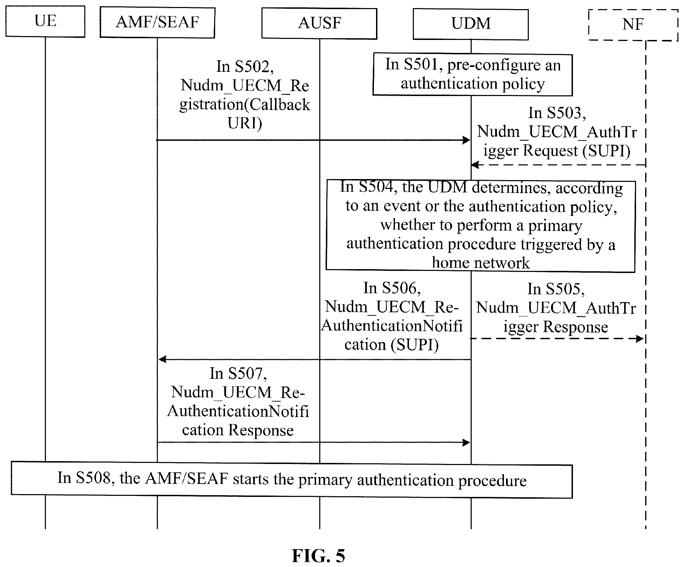

A primary authentication method shown in FIG. 5 includes the following.

In S501, the UDM pre-configures an operator authentication policy to determine when to trigger a primary authentication procedure.

In S502, the UE performs network registration. The AMF/SEAF registers the UE with the UDM through Nudm_registration and provides a callback uniform resource identifier (URI) for the UDM.

In S503, an NF (such as the AAnF) determines, according to the operator local authentication policy, whether to send an Nudm_UECM_AuthTrigger request to the UDM so that the UDM service can be used for primary authentication. The Nudm_UECM_AuthTrigger request includes an SUPI of the UE.

In S504, the UDM determines, according to an event (for example, an NF request) or an authentication policy of the UDM, whether to perform the primary authentication procedure triggered by a home network. If different AMF/SEAFs registered in the UDM are used for different access modes, the UDM selects one AMF/SEAF to perform primary authentication. The AMF/SEAF selection criterion depends on the authentication policy of the UDM.

In S505, if the UDM determines, according to the NF request, whether to perform the primary authentication procedure triggered by the home network, the UDM replies to the NF with an Nudm_UECM_AuthTrigger response.

In S506, the UDM sends an Nudm_UECM_Re-AuthenticationNotification message to the AMF/SEAF through the callback URI provided by the AMF/SEAF. The message carries the SUPI of the UE.

In S507, after receiving the Nudm_UECM_Re-AuthenticationNotification message from the UDM, the AMF/SEAF determines, according to a local authentication policy and the state of the UE, whether to perform the primary authentication procedure. If the AMF/SEAF determines that the primary authentication procedure cannot be performed, the AMF/SEAF sends an authentication response message with a failure cause to the UDM. If the AMF/SEAF determines that the primary authentication procedure can be performed, the AMF/SEAF confirms the primary re-authentication request sent by the UDM with the UDM. If the AMF/SEAF confirms the primary re-authentication request sent by the UDM but cannot start the primary authentication of the UE (for example, if the UE is in an inaccessible state), the AMF/SEAF sets an authentication suspension flag.

During this period, when the UE is reconnected to the same AMF/SEAF or switches to an accessible state again, the AMF/SEAF checks the authentication suspension flag and performs re-authentication if necessary. Once the re-authentication of the UE is completed, the AMF/SEAF resets the authentication suspension flag. When receiving the authentication response message with a failure cause sent from the AMF/SEAF, the UDM may detect whether the AMF/SEAF in another access mode is available. The UDM may select another available AMF/SEAF and retry to trigger primary authentication.

In S508, the AMF/SEAF starts the primary authentication procedure.

After the AMF/SEAF receives the Nudm_UECM_Re-AuthenticationNotification message sent by the UDM, there is still a problem that the AMF/SEAF and the UDM cannot correctly perform an operation in various scenarios, such as when the UE is performing primary authentication, a mobility registration procedure, or a handover procedure, which seriously affects service quality and degrades user experience.

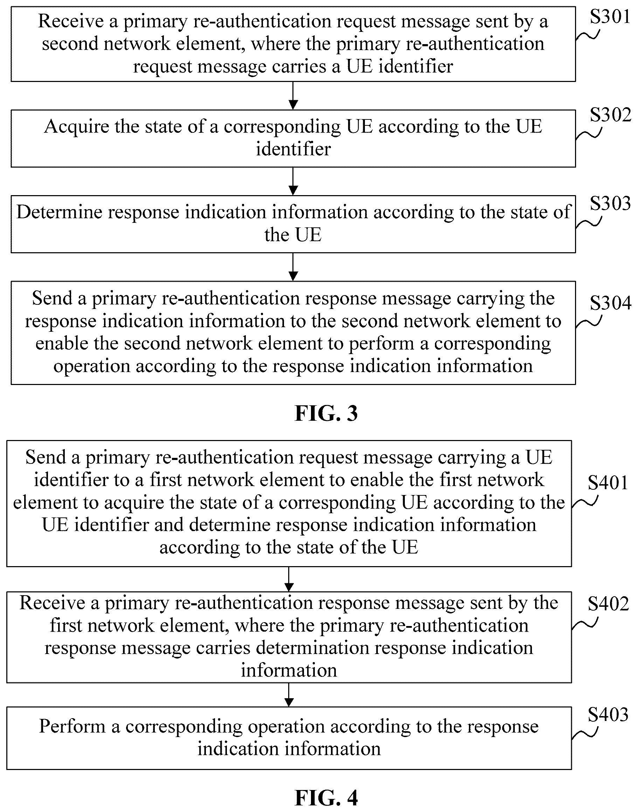

Embodiments of the present application first provide a primary authentication method for a UE, and the method is applied to a first network element. Referring to FIG. 3, FIG. 3 illustrates a flowchart of a primary authentication method for a UE according to an embodiment of the present application. As shown in FIG. 3, the primary authentication method for the UE includes, but is not limited to, S301 to S304.

In S301, a primary re-authentication request message sent by a second network element is received, where the primary re-authentication request message carries a UE identifier.

It may be understood that the first network element is a network element of a visited network and the second network element is a network element of a home network. In a primary authentication procedure, the second network element sends the primary re-authentication request carrying the UE identifier to the first network element to request the first network element to perform the primary authentication procedure of the UE. The UE identifier may be a subscriber permanent identifier (SUPI) of the user equipment in an operator network or another UE identifier capable of uniquely identifying the UE, which is not limited in this embodiment of the present application.

In S302, the state of a UE corresponding to the UE identifier is acquired according to the UE identifier.

It may be understood that after receiving the primary re-authentication request message carrying the UE identifier, the first network element acquires the state of the corresponding UE according to the UE identifier carried by the primary re-authentication request message. In some embodiments, the state of the UE may be the UE state that may cause the first network element and the second network element to fail to correctly perform the primary authentication operation such as whether the user equipment is performing primary authentication, a mobility registration procedure, or a handover procedure, which is not limited in this embodiment of the present application.

It is to be noted that the UE requests the first network element to provide corresponding services by sending various service requests carrying the state information of the UE to the first network element. The first network element may acquire the UE state from various service requests reported by the UE and record the UE state by using the UE identifier capable of uniquely identifying the user equipment. Alternatively, the first network element actively requests the UE to reply to the state information of the UE and record the UE state by using the UE identifier capable of uniquely identifying the user equipment. Therefore, the first network element can acquire the state of the corresponding UE from the respective UE state recording information according to the UE identifier.

In S303, response indication information is determined according to the state of the UE.

It should be understood that after acquiring the state of the corresponding UE according to the UE identifier, the first network element determines the response indication information according to the state of the UE. The response indication information is determined by the state of the UE, which may be indication information such as the indication information representing the determination of the primary re-authentication request message sent by the second network element, an error code for indicating that the UE is in a special state, or a cause value for indicating that the UE is in a special state. Different response indication information is used for indicating a different UE state to instruct that the second network element performs the subsequent corresponding operation in the different UE state.

In S304, a primary re-authentication response message carrying the response indication information is sent to the second network element to enable the second network element to perform a corresponding operation according to the response indication information.

It may be understood that after determining the response indication information according to the state of the UE, the first network element sends the primary re-authentication response information carrying the response indication information to the second network element. After receiving the primary re-authentication response information sent by the first network element, the second network element may perform the subsequent operation for the special UE state according to the response indication information carried in the primary re-authentication response information so that the subsequent operation of the network element can be adapted to the current state of the UE, avoiding the situation that authentication fails because the network element cannot correctly perform the corresponding primary authentication operation when the UE is in a special state, and achieving a purpose of improving the success rate of the primary authentication process of the UE.

In some embodiments, the first network element is an AMF network element or an SEAF network element. The second network element is a UDM network element.

It should be understood that the first network element is an AMF network element or an SEAF network element and the second network element is a UDM network element. In the primary authentication procedure of the UE shown in FIG. 4, when the UE performs network registration, the AMF/SEAF network element registers the UE with the UDM network element through an Nudm registration request (Nudm_UECM_registration). The UDM network element determines, according to an event or an authentication policy of the UDM network element, whether to perform the primary authentication procedure triggered by the home network. Then the UDM network element sends a primary re-authentication request message, that is, an Nudm_UECM_Re-AuthenticationNotification message, to the AMF/SEAF. The message carries the SUPI of the UE. After receiving the primary re-authentication request message sent by the UDM network element, the AMF/SEAF network element determines whether to perform the primary authentication procedure of the UE. The AMF/SEAF network element acquires the state of the corresponding UE according to the SUPI of the UE. Then, the AMF/SEAF network element determines the response indication information according to the state of the UE and sends the primary re-authentication response message (Nudm_UECM_Re-AuthenticationNotification response message) carrying the response indication information to the UDM network element. The UDM network element performs the corresponding operation according to the response indication information carried in the response message.

In some embodiments, determining the response indication information according to the state of the UE includes the following.

In a case where the state of the UE is that a primary authentication procedure is ongoing, it is determined that the response indication information is request acknowledgement indication information.

Correspondingly, that the primary re-authentication response message carrying the response indication information is sent to the second network element to enable the second network element to perform the corresponding operation according to the response indication information includes the following.

The primary re-authentication response message carrying the request acknowledgement indication information is sent to the second network element to enable the second network element to perform the primary authentication procedure of the UE according to the request acknowledgement indication information.

It may be understood that in the case where the UE is performing the primary authentication procedure when the first network element receives the primary re-authentication request message sent by the second network element, the first network element determines that the response indication information is the request acknowledgement indication information and sends the primary re-authentication response message carrying the request acknowledgement indication information to the second network element. That is, the first network element directly confirms the primary re-authentication request of the second network element in the primary re-authentication response message with which the second network element is replied to.

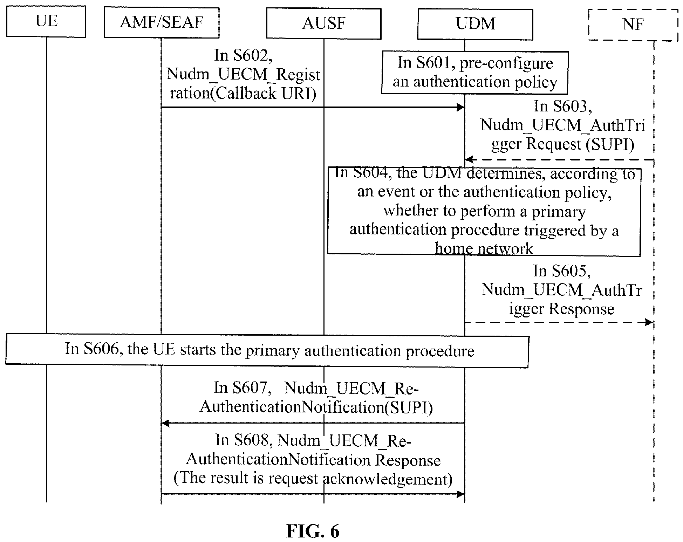

In some embodiments, by way of example, the first network element is an AMF/SEAF network element, and the second network element is a UDM network element. Referring to FIG. 6, FIG. 6 shows a flowchart of a primary authentication method for a UE according to an embodiment of the present application. As shown in FIG. 6, if the AMF/SEAF already performs the primary authentication procedure on the UE when receiving the primary re-authentication request message sent by the UDM, the AMF/SEAF replies to the UDM with the Nudm_UECM_Re-AuthenticationNotification response message and confirms the primary re-authentication request sent by the UDM in the response message.

In this embodiment of the present application, when the first network element as the network element of the visited network receives the primary re-authentication request sent by the second network element as the network element of the home network for instructing the first network element to perform primary authentication on the UE, the UE is performing the primary authentication procedure. In this case, the first network element confirms a primary authentication request to the second network element so that the subsequent operation of the network element can be adapted to the state that the UE is performing the primary authentication procedure, preventing the network element of the visited network and the network element of the home network, when performing the primary authentication procedure, from failing to perform the corresponding primary authentication operation in the case of the UE performing the primary authentication procedure, thereby achieving the purpose of improving the success rate of the primary authentication procedure of the UE.

In some embodiments, determining the response indication information according to the state of the UE includes the following.

In a case where the state of the UE is that a mobility registration procedure is ongoing, it is determined that the response indication information is first error indication information.

Correspondingly, that the primary re-authentication response message carrying the response indication information is sent to the second network element to enable the second network element to perform the corresponding operation according to the response indication information includes the following.

The primary re-authentication response message carrying the first error indication information is sent to the second network element to enable the second network element to start a timer according to the first error indication information and resend the primary re-authentication request message according to the latest first network element registration information of the UE after the timer expires.

It may be understood that in the case where the UE is performing the mobility registration procedure when the first network element receives the primary re-authentication request message sent by the second network element, the first network element determines that the response message is the first error indication information and sends the primary re-authentication response message carrying the first error indication information to the second network element. When the second network element receives the primary re-authentication response message carrying the first error indication information, the second network element starts the timer and resends the primary re-authentication request message according to the latest first network element registration information of the UE after the timer expires. That is, the second network element resends the primary re-authentication request message of the UE after a preset time interval. A receiving network element of the subsequent primary re-authentication request message is determined according to whether the first network element is changed after the mobility registration procedure of the UE. If the latest first network element registration information of the UE shows that the first network element is unchanged after the mobility registration process of the UE, the second network element resends the primary re-authentication request message of the UE to the original first network element after the preset time interval. If the latest first network element registration information of the UE shows that the first network element is changed after the mobility registration process of the UE, the second network element resends the primary re-authentication request message of the UE to the changed first network element after the preset time interval.

It is to be noted that a UE performing the mobility registration procedure indicates that when the UE moves from one service area to another service area, the UE initiates a registration request to the AMF in the new service area.

It is to be further noted that the first error indication information is used for indicating a failure cause of primary authentication. The first error indication information may be an error code for representing that "the UE is performing the mobility registration procedure", for example, TEMPORARY_REJECT_REGISTRATION_ONGOING. Alternatively, the first error indication information may be a cause value for representing that "the UE is performing the mobility registration procedure", for example, cause value 1. That is, that "the UE is performing the mobility registration procedure" can be notified to the second network element through the first error indication information. The specific form of the first error indication information is not limited in this embodiment of the present application.

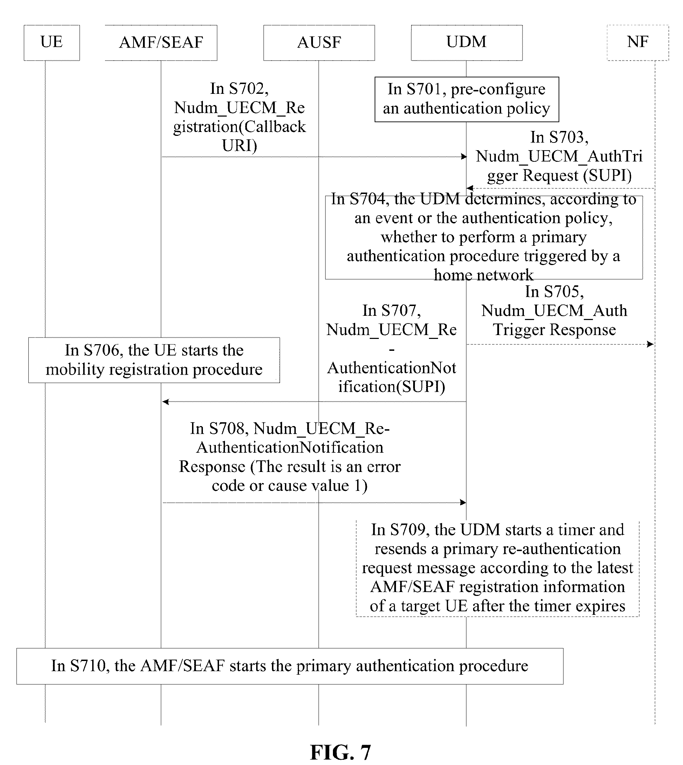

In some embodiments, by way of example, the first network element is an AMF/SEAF network element, and the second network element is a UDM network element. Referring to FIG. 7, FIG. 7 shows a flowchart of a primary authentication method for a UE according to an embodiment of the present application. As shown in FIG. 7, if the UE is performing the mobility registration procedure when the AMF/SEAF receives the primary re-authentication request message sent by the UDM, the AMF/SEAF replies to the UDM with the Nudm_UECM_Re-AuthenticationNotification response message. The response message includes the error code (TEMPORARY_REJECT_REGISTRATION_ONGOING) indicating a failure cause or cause value 1 indicating that "the UE is performing the mobility registration procedure". When the UDM receives the response message and the response message includes the error code TEMPORARY_REJECT_REGISTRATION_ONGOING for indicating a failure cause or cause value of 1 for indicating that "the UE is performing the mobility registration procedure", the UDM starts the timer (for example, 1 s) and resends the primary re-authentication request message according to the latest AMF/SEAF registration information of the UE after the timer expires.

In this embodiment of the present application, when the first network element as the network element of the visited network receives the primary re-authentication request sent by the second network element as the network element of the home network for instructing the first network element to perform primary authentication on the UE, the UE is performing the mobility registration procedure. In this case, the first network element sends the primary re-authentication response message carrying the first error indication information to the second network element. After receiving the primary re-authentication response message carrying the first error indication information, the second network element resends the primary re-authentication request message according to the latest first network element registration information of the UE so that the subsequent operation of the network element can be adapted to the state that the UE is performing the mobility registration procedure, preventing the network element of the visited network and the network element of the home network, when performing the primary authentication procedure, from failing to perform the corresponding primary authentication operation in the case of the UE performing the mobility registration procedure, thereby achieving the purpose of improving the success rate of the primary authentication procedure of the UE.

In some embodiments, determining the response indication information according to the state of the UE includes the following.

In a case where the state of the UE is that a mobility registration procedure is ongoing and where the first network element is unchanged in the mobility registration procedure, it is determined that the response indication information is request acknowledgement indication information.

Correspondingly, that the primary re-authentication response message carrying the response indication information is sent to the second network element to enable the second network element to perform the corresponding operation according to the response indication information includes the following.

The primary re-authentication response message carrying the request acknowledgement indication information is sent to the second network element to enable the second network element to perform a primary authentication procedure of the UE according to the request acknowledgement indication information.

It may be understood that in the case where the UE is performing the mobility registration procedure and the first network element is unchanged in the mobility registration procedure when the first network element receives the primary re-authentication request message sent by the second network element, the first network element determines that the response indication information is the request acknowledgement indication information and sends the primary re-authentication response message carrying the request acknowledgement indication information to the second network element. That is, the first network element directly confirms the primary re-authentication request of the second network element in the primary re-authentication response message with which the second network element is replied to.

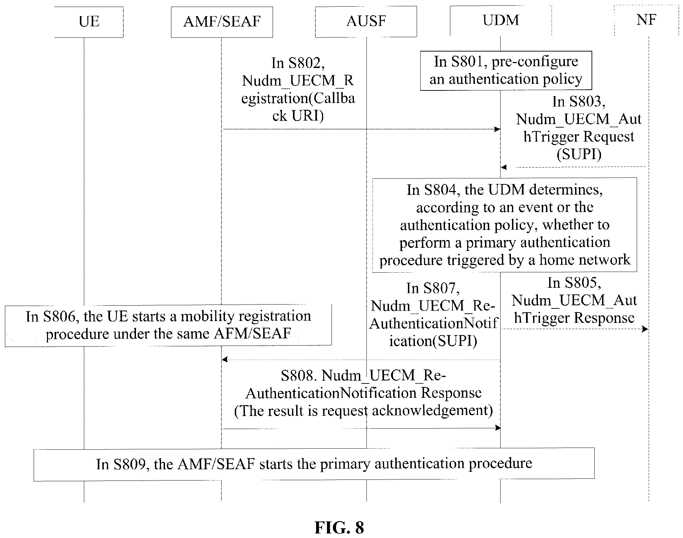

In some embodiments, by way of example, the first network element is an AMF/SEAF network element, and the second network element is a UDM network element. Referring to FIG. 8, FIG. 8 shows a flowchart of a primary authentication method for a UE according to an embodiment of the present application. As shown in FIG. 8, when the AMF/SEAF receives the primary re-authentication request message sent by the UDM, the UE is performing the mobility registration procedure, and the AMF/SEAF is not changed after the UE performs the mobility registration procedure. In this case, the AMF/SEAF replies to the UDM with the Nudm_UECM_Re-AuthenticationNotification response message and confirms the primary re-authentication request sent by the UDM in the response message.

In this embodiment of the present application, when the first network element as the network element of the visited network receives the primary re-authentication request sent by the second network element as the network element of the home network for instructing the first network element to perform primary authentication on the UE, the UE is performing the mobility registration procedure, and the first network element is not changed in the mobility registration procedure. In this case, the first network element confirms the primary authentication request to the second network element so that the subsequent operation of the network element can be adapted to the state that the UE is performing the mobility registration procedure, preventing the network element of the visited network and the network element of the home network, when performing the primary authentication procedure, from failing to perform the corresponding primary authentication operation in the case of the UE performing the mobility registration procedure, thereby achieving the purpose of improving the success rate of the primary authentication procedure of the UE.

In some embodiments, determining the response indication information according to the state of the UE includes the following.

In a case where the state of the UE is that a mobility registration procedure is ongoing and where a first network element change event occurs in the mobility registration procedure, it is determined that the response indication information is second error indication information, third error indication information, or fourth error indication information, where the first network element change event indicates that access of the UE is handed over from a source first network element to a target first network element, and the first network element is the source first network element.

Correspondingly, that the primary re-authentication response message carrying the response indication information is sent to the second network element to enable the second network element to perform the corresponding operation according to the response indication information includes the following.

The primary re-authentication response message carrying the second error indication information is sent to the second network element to enable the second network element to start a timer according to the second error indication information and resend the primary re-authentication request message according to the latest first network element registration information of the UE after the timer expires.

Alternatively, the primary re-authentication response message carrying the third error indication information is sent to the second network element to enable the second network element to terminate a primary authentication procedure of the UE according to the third error indication information.

Alternatively, the primary re-authentication response message carrying the fourth error indication information is sent to the second network element to enable the second network element to determine the target first network element according to the fourth error indication information and send the primary re-authentication response message to the target first network element after the mobility registration procedure ends.

It may be understood that in the case where the UE is performing the mobility registration procedure, the first network element change event occurs in the mobility registration procedure, and the current first network element is the source first network element in the first network element change event when the first network element receives the re-primary authentication request message sent by the second network element, the first network element determines that the response indication information is the second error indication information, the third error indication information, or the fourth error indication information and sends the primary re-authentication response message carrying the corresponding error indication information to the second network element. The second network element performs the subsequent operation according to the type of the error indication information carried in the primary re-authentication response message.

It is to be noted that each of the second error indication information, the third error indication information, and the fourth error indication information is used for indicating a failure cause of primary authentication. The second error indication information may be an error code for representing that "the UE is performing the mobility registration procedure", for example, TEMPORARY_REJECT_REGISTRATION_ONGOING. The third error indication information may be an error code for representing that "authentication is not allowed", for example, REAUTHENTICATION_NOT_ALLOWED. The fourth error indication information may be a cause value for representing that "the UE is performing the mobility registration procedure and the first network element will be changed", for example, cause value 2. That is, as long as different types of error indication information can notify different failure causes of primary authentication of the second network element, the specific form of the second error indication information, the specific form of the third error indication information, and the specific form of the fourth error indication information are not limited in this embodiment of the present application.

When the second network element receives the primary re-authentication response message sent by the first network element and carrying the second error indication information, the second network element starts the timer according to the second error indication information and resends the primary re-authentication request message according to the latest first network element registration information of the UE after the timer expires. That is, through the second error indication information carried in the primary re-authentication response message, the second network element knows that the UE is performing the mobility registration procedure. The second network element selects to resend the primary re-authentication request message of the UE after the preset time interval to continue the primary authentication procedure of the UE.

When the second network element receives the primary re-authentication response message sent by the first network element and carrying the third error indication information, the second network element terminates the primary authentication procedure of the UE according to the third error indication information. That is, through the third error indication information carried in the primary re-authentication response message, the second network element knows that authentication is not allowed. The second network element selects to terminate the primary authentication procedure of the UE. If a new first network element registration request is received subsequently, the second network element may determine, according to an authentication policy of the second network element, whether to start a new primary authentication procedure.

When the second network element receives the primary re-authentication response message sent by the first network element and carrying the fourth error indication information, the second network element determines the target first network element according to the fourth error indication information and sends the primary re-authentication response message to the target first network element after the mobility registration procedure ends. That is, through the fourth error indication information carried in the primary re-authentication response message, the second network element knows that the UE is performing the mobility registration procedure and access of the UE is handed over from the source first network element to the target first network element. The second network element selects to send the primary re-authentication response message to the target first network element after the mobility registration procedure ends, thereby continuing the primary authentication procedure of the UE.

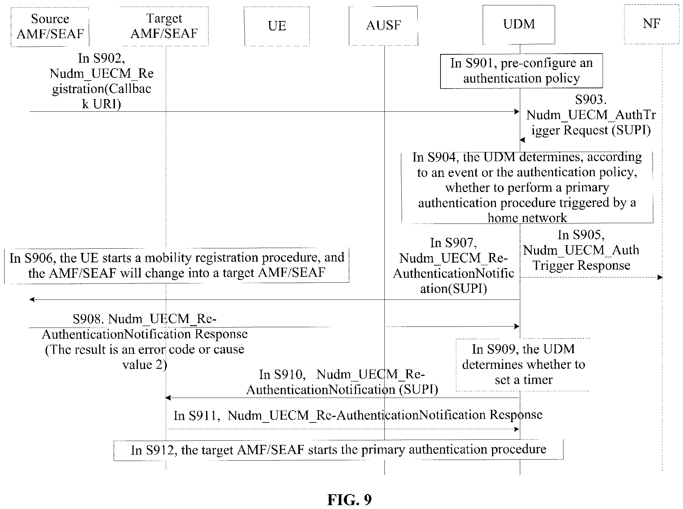

In some embodiments, by way of example, the first network element is an AMF/SEAF network element, and the second network element is a UDM network element. Referring to FIG. 9, FIG. 9 shows a flowchart of a primary authentication method for a UE according to an embodiment of the present application. As shown in FIG. 9, when the source AMF/SEAF receives the primary re-authentication request message sent by the UDM, the UE is performing the mobility registration procedure, and the AMF/SEAF will be changed. Moreover, the source AMF/SEAF receives the primary re-authentication request message sent by the UDM. In this case, the source AMF/SEAF may perform one of the following.

In A, the source AMF/SEAF replies to the UDM with the Nudm_UECM_Re-AuthenticationNotification response message. The response message includes the error code TEMPORARY_REJECT_REGISTRATION_ONGOING for indicating a failure cause.

In B, the source AMF/SEAF replies to the UDM with the Nudm_UECM_Re-AuthenticationNotification response message. The response message includes the error code REAUTHENTICATION_NOT_ALLOWED for indicating a failure cause.

In C, the source AMF/SEAF replies to the UDM with the Nudm_UECM_Re-AuthenticationNotification response message. The response message includes cause value 2 for indicating that "the UE is performing the mobility registration procedure and the AMF/SEAF will be changed".

Correspondingly, after receiving the Nudm_UECM_Re-AuthenticationNotification response message, the UDM performs the subsequent procedure according to the error indication information carried in the response message.

In A, if the response message includes the second error indication information, that is, the error code TEMPORARY_REJECT_REGISTRATION_ONGOING, the UDM starts the timer (for example, 1 s) and resends the primary re-authentication request message as in S907, according to the latest AMF/SEAF registration information of the UE after the timer expires.

In B, if the response message includes the third error indication information, that is, the error code REAUTHENTICATION_NOT_ALLOWED, the UDM does not need to perform other operations. That is, the UDM terminates the primary authentication procedure of the UE. If the UDM receives a new AMF registration request subsequently, the UDM may determine, according to the authentication policy of the UDM, whether to start a new primary authentication procedure.

In C, if the response message includes the fourth error indication information, that is, cause value 2 for representing that "the UE is performing the mobility registration procedure and the AMF/SEAF will be changed", the UDM determines the changed target AMF/SEAF and sends the primary re-authentication request message to the target AMF/SEAF after the current mobility registration procedure ends.

In this embodiment of the present application, when the first network element as the network element of the visited network receives the primary re-authentication request sent by the second network element as the network element of the home network for instructing the first network element to perform primary authentication on the UE, the UE is performing the mobility registration procedure, the first network element change event occurs in the mobility registration procedure, and the current first network element is the source first network element in the first network element change event. In this case, the first network element sends the primary re-authentication response message carrying the second error indication information, the second error indication information, or the third error indication information to the second network element. The second network element performs the corresponding operation according to the type of the error indication information carried in the primary re-authentication response message so that the subsequent operation of the network element can be adapted to the state that the UE is performing the mobility registration procedure, preventing the network element of the visited network and the network element of the home network, when performing the primary authentication procedure, from failing to perform the corresponding primary authentication operation in the case of the UE performing the mobility registration procedure and the first network element being changed, thereby achieving the purpose of improving the success rate of the primary authentication procedure of the UE.

In some embodiments, determining the response indication information according to the state of the UE includes the following.

In a case where the state of the UE is that a mobility registration procedure is ongoing and where a first network element change event occurs in the mobility registration procedure, it is determined that the response indication information is request acknowledgement indication information, where the first network element change event indicates that access of the UE is handed over from a source first network element to a target first network element, and the first network element is the target first network element.

Correspondingly, that the primary re-authentication response message carrying the response indication information is sent to the second network element to enable the second network element to perform the corresponding operation according to the response indication information includes the following.

The primary re-authentication response message carrying the request acknowledgement indication information is sent to the second network element to enable the second network element to perform a primary authentication procedure of the UE according to the request acknowledgement indication information.

It may be understood that in the case where the UE is performing the mobility registration procedure, the first network element change event occurs in the mobility registration procedure, and the current first network element is the target first network element in the first network element change event when the first network element receives the primary re-authentication request message sent by the second network element, the first network element determines that the response indication information is the request acknowledgement indication information and sends the primary re-authentication response message carrying the request acknowledgement indication information to the second network element. That is, the first network element directly confirms the primary re-authentication request of the second network element in the primary re-authentication response message with which the second network element is replied to.

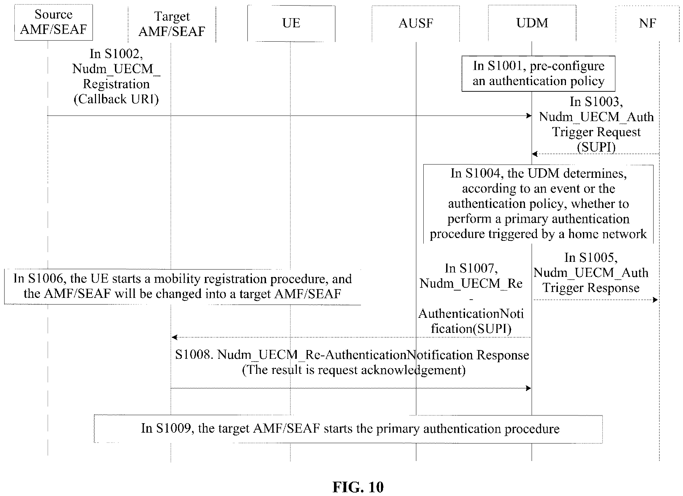

In some embodiments, by way of example, the first network element is an AMF/SEAF network element, and the second network element is a UDM network element. Referring to FIG. 10, FIG. 10 shows a flowchart of a primary authentication method for a UE according to an embodiment of the present application. As shown in FIG. 10, if the UE is performing the mobility registration procedure when the target AMF/SEAF receives the primary re-authentication request message sent by the UDM, the target AMF/SEAF replies to the UDM with the Nudm_UECM_Re-AuthenticationNotification response message and confirms the primary re-authentication request sent by the UDM in the response message.

In this embodiment of the present application, when the first network element as the network element of the visited network receives the primary re-authentication request sent by the second network element as the network element of the home network for instructing the first network element to perform primary authentication on the UE, the UE is performing the mobility registration procedure, the first network element change event occurs in the mobility registration procedure, and the current first network element is the target first network element in the first network element change event. In this case, the first network element confirms the primary authentication request with the second network element so that the subsequent operation of the network element can be adapted to the state that the UE is performing the mobility registration procedure, preventing the network element of the visited network and the network element of the home network, when performing the primary authentication procedure, from failing to perform the corresponding primary authentication operation in the case of the UE performing the mobility registration procedure, thereby achieving the purpose of improving the success rate of the primary authentication procedure of the UE.

In some embodiments, determining the response indication information according to the state of the UE includes the following.

In a case where the state of the UE is that a handover procedure is ongoing, it is determined that the response indication information is fifth error indication information.

Correspondingly, that the primary re-authentication response message carrying the response indication information is sent to the second network element to enable the second network element to perform the corresponding operation according to the response indication information includes the following.

The primary re-authentication response message carrying the fifth error indication information is sent to the second network element to enable the second network element to start a timer according to the fifth error indication information and resend the primary re-authentication request message according to the latest first network element registration information of the UE after the timer expires.

It may be understood that in the case where the UE is performing the handover procedure when the first network element receives the primary re-authentication request message sent by the second network element, the first network element determines that the response message is the first error indication information and sends the primary re-authentication response message carrying the fifth error indication information to the second network element. When the second network element receives the primary re-authentication response message carrying the fifth error indication information, the second network element starts the timer and resends the primary re-authentication request message according to the latest first network element registration information of the UE after the timer expires. That is, the second network element resends the primary re-authentication request message of the UE after a preset time interval. A receiving network element of the subsequent primary re-authentication request message is determined according to whether the first network element is changed after the handover procedure of the UE. If the latest first network element registration information of the UE shows that the first network element remains unchanged after the handover process of the UE, the second network element resends the primary re-authentication request message of the UE to the original first network element after the preset time interval. If the latest first network element registration information of the UE shows that the first network element is changed after the handover process of the UE, the second network element resends the primary re-authentication request message of the UE to the changed first network element after the preset time interval.

It is to be noted that the handover procedure of a UE is a procedure in which the UE is handed over from one serving cell to another serving cell.

It is to be further noted that the fifth error indication information is used for indicating a failure cause of primary authentication. The fifth error indication information may be an error code for representing that "the UE is performing the handover procedure", for example, TEMPORARY_REJECT_HANDOVER_ONGOING. Alternatively, the fifth error indication information may be a cause value for representing that "the UE is performing the handover procedure", for example, cause value 3. That is, that "the UE is performing the handover procedure" can be notified to the second network element through the fifth error indication information. The specific form of the fifth error indication information is not limited in this embodiment of the present application.

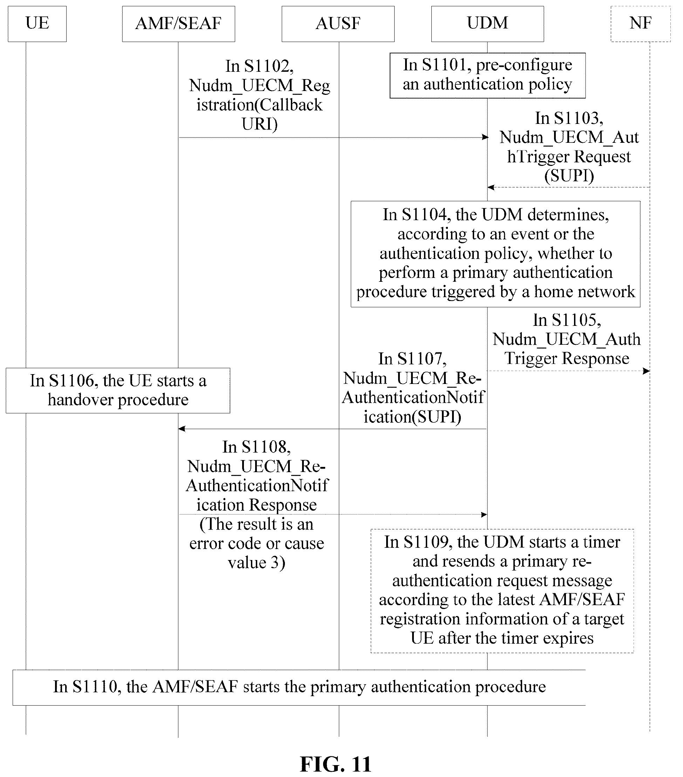

In some embodiments, by way of example, the first network element is an AMF/SEAF network element, and the second network element is a UDM network element. Referring to FIG. 11, FIG. 11 shows a flowchart of a primary authentication method for a UE according to an embodiment of the present application. As shown in FIG. 11, if the UE is performing the handover procedure when the AMF/SEAF receives the primary re-authentication request message sent by the UDM, and whether or not the AMR/SEAF is changed after the UE performs the handover procedure, the AMF/SEAF replies to the UDM with the Nudm_UECM_Re-AuthenticationNotification response message. The response message includes the error code (TEMPORARY_REJECT_HANDOVER_ONGOING) indicating a failure cause or cause value 3 indicating that "the UE is performing the handover procedure". When the UDM receives the response message and the response message includes the error code TEMPORARY_REJECT_HANDOVER_ONGOING for indicating a failure cause or cause value 3 for indicating that "the UE is performing the handover procedure", the UDM starts the timer (for example, 1 s) and resends the primary re-authentication request message according to the latest AMF/SEAF registration information of the UE after the timer expires.

In this embodiment of the present application, when the first network element as the network element of the visited network receives the primary re-authentication request sent by the second network element as the network element of the home network for instructing the first network element to perform primary authentication on the UE, the UE is performing the handover procedure. In this case, the first network element sends the primary re-authentication response message carrying the fifth error indication information to the second network element. After receiving the primary re-authentication response message carrying the fifth error indication information, the second network element resends the primary re-authentication request message according to the latest first network element registration information of the UE so that the subsequent operation of the network element can be adapted to the state that the UE is performing the handover procedure, preventing the network element of the visited network and the network element of the home network, when performing the primary authentication procedure, from failing to perform the corresponding primary authentication operation in the case of the UE performing the handover procedure, thereby achieving the purpose of improving the success rate of the primary authentication procedure of the UE.

In some embodiments, determining the response indication information according to the state of the UE includes the following.

In a case where the state of the UE is that a handover procedure is ongoing and where the first network element is not changed in the handover procedure, it is determined that the response indication information is request acknowledgement indication information.

Correspondingly, that the primary re-authentication response message carrying the response indication information is sent to the second network element to enable the second network element to perform the corresponding operation according to the response indication information includes the following.

The primary re-authentication response message carrying the request acknowledgement indication information is sent to the second network element to enable the second network element to perform a primary authentication procedure of the UE according to the request acknowledgement indication information.

It may be understood that in the case where the UE is performing the handover procedure and the first network element remains unchanged in the handover procedure when the first network element receives the primary re-authentication request message sent by the second network element, the first network element determines that the response indication information is the request acknowledgement indication information and sends the primary re-authentication response message carrying the request acknowledgement indication information to the second network element. That is, the first network element directly confirms the primary re-authentication request of the second network element in the primary re-authentication response message with which the second network element is replied to.

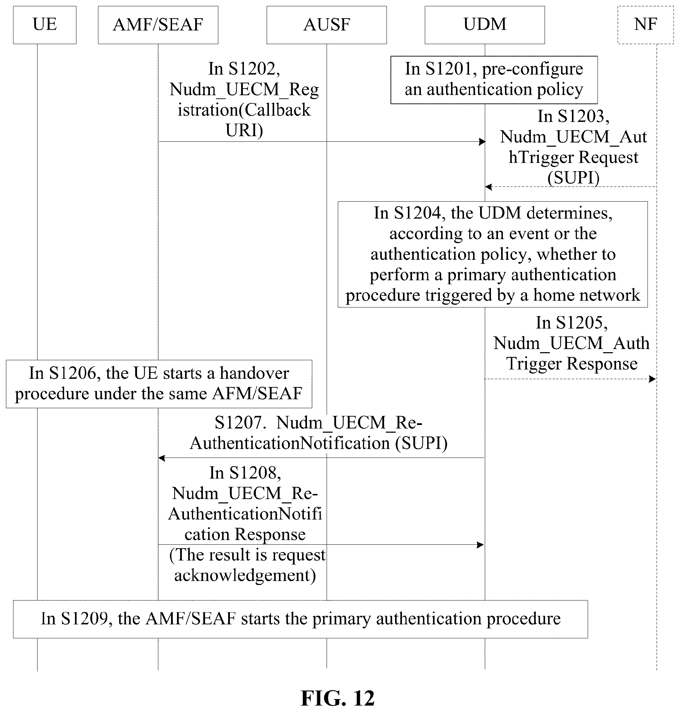

In some embodiments, by way of example, the first network element is an AMF/SEAF network element, and the second network element is a UDM network element. Referring to FIG. 12, FIG. 12 shows a flowchart of a primary authentication method according to an embodiment of the present application. As shown in FIG. 12, when the AMF/SEAF receives the primary re-authentication request message sent by the UDM, the UE is performing the handover procedure, and the AMF/SEAF is not changed after the UE performs the handover procedure. In this case, the AMF/SEAF replies to the UDM with the Nudm_UECM_Re-AuthenticationNotification response message and confirms the primary re-authentication request sent by the UDM in the response message.

In this embodiment of the present application, when the first network element as the network element of the visited network receives the primary re-authentication request sent by the second network element as the network element of the home network for instructing the first network element to perform primary authentication on the UE, the UE is performing the handover procedure, and the first network element is not changed in the handover procedure. In this case, the first network element confirms the primary authentication request to the second network element so that the subsequent operation of the network element can be adapted to the state that the UE is performing the handover procedure, preventing the network element of the visited network and the network element of the home network, when performing the primary authentication procedure, from failing to perform the corresponding primary authentication operation in the case of the UE performing the handover procedure, thereby achieving the purpose of improving the success rate of the primary authentication procedure of the UE.

In some embodiments, determining the response indication information according to the state of the UE includes the following.

In a case where the state of the UE is that a handover procedure is ongoing and where a first network element change event occurs in the handover procedure, it is determined that the response indication information is sixth error indication information, seventh error indication information, or eighth error indication information, where the first network element change event indicates that access of the UE is handed over from a source first network element to a target first network element, and the first network element is the source first network element.

Correspondingly, that the primary re-authentication response message carrying the response indication information is sent to the second network element to enable the second network element to perform the corresponding operation according to the response indication information includes the following.

The primary re-authentication response message carrying the sixth error indication information is sent to the second network element to enable the second network element to start a timer according to the sixth error indication information and resend the primary re-authentication request message according to the latest first network element registration information of the UE after the timer expires.

Alternatively, the primary re-authentication response message carrying the seventh error indication information is sent to the second network element to enable the second network element to terminate a primary authentication procedure of the UE according to the seventh error indication information.

Alternatively, the primary re-authentication response message carrying the eighth error indication information is sent to the second network element to enable the second network element to determine the target first network element according to the eighth error indication information and send the primary re-authentication response message to the target first network element after the handover procedure ends.

It may be understood that in the case where the UE is performing the handover procedure, the first network element change event occurs in the handover procedure, and the current first network element is the source first network element in the first network element change event when the first network element receives the primary re-authentication request message sent by the second network element, the first network element determines that the response indication information is the sixth error indication information, the seventh error indication information, or the eighth error indication information and sends the primary re-authentication response message carrying the corresponding error indication information to the second network element. The second network element performs the subsequent operation according to the type of the error indication information carried in the primary re-authentication response message.

It is to be noted that each of the sixth error indication information, the seventh error indication information, and the eighth error indication information is used for indicating a failure cause of primary authentication. The sixth error indication information may be an error code for representing that "the UE is performing the handover procedure", for example, TEMPORARY_REJECT_HANDOVER_ONGOING. The seventh error indication information may be an error code for representing that "authentication is not allowed", for example, REAUTHENTICATION_NOT_ALLOWED. The eighth error indication information may be a cause value for representing that "the UE is performing the handover procedure and the first network element will be changed", for example, cause value 4. That is, as long as different types of error indication information can notify different failure causes of primary authentication of the second network element, the specific form of the sixth error indication information, the specific form of the seventh error indication information, and the specific form of the eighth error indication information are not limited in this embodiment of the present application.

When the second network element receives the primary re-authentication response message sent by the first network element and carrying the sixth error indication information, the second network element starts the timer according to the sixth error indication information and resends the primary re-authentication request message according to the latest first network element registration information of the UE after the timer expires. That is, through the fifth error indication information carried in the primary re-authentication response message, the second network element knows that the UE is performing the handover procedure. The second network element selects to resend the primary re-authentication request message of the UE after the preset time interval to continue the primary authentication procedure of the UE.

When the second network element receives the primary re-authentication response message sent by the first network element and carrying the seventh error indication information, the second network element terminates the primary authentication procedure of the UE according to the seventh error indication information. That is, according to the seventh error indication information carried in the primary re-authentication response message, the second network element knows that authentication is not allowed. The second network element selects to terminate the primary authentication procedure of the UE. After a new first network element registration request is received subsequently, the second network element may determine, according to the authentication policy of the second network element, whether to start a new primary authentication procedure.

When the second network element receives the primary re-authentication response message sent by the first network element and carrying the eighth error indication information, the second network element determines the target first network element according to the eighth error indication information and sends the primary re-authentication response message to the target first network element after the mobility registration procedure ends. That is, through the eighth error indication information carried in the primary re-authentication response message, the second network element knows that the UE is performing the handover procedure and access of the UE is handed over from the source first network element to the target first network element. The second network element selects to send the primary re-authentication response message to the target first network element after the handover procedure ends, thereby continuing the primary authentication procedure of the UE.

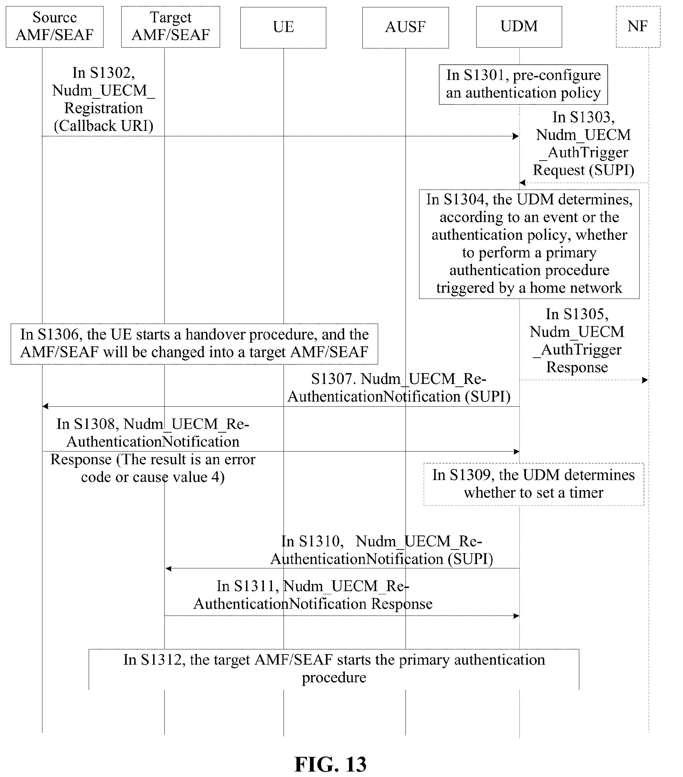

In some embodiments, by way of example, the first network element is an AMF/SEAF network element, and the second network element is a UDM network element. Referring to FIG. 13, FIG. 13 shows a flowchart of a primary authentication method for a UE according to an embodiment of the present application. As shown in FIG. 13, when the source AMF/SEAF receives the primary re-authentication request message sent by the UDM, the UE is performing the mobility registration procedure, and the AMF/SEAF will be changed. Moreover, the source AMF/SEAF receives the primary re-authentication request message sent by the UDM. In this case, the source AMF/SEAF may perform one of the following.

In A, the source AMF/SEAF replies to the UDM with the Nudm_UECM_Re-AuthenticationNotification response message. The response message includes the error code TEMPORARY_REJECT_HANDOVER_ONGOING for indicating the failure cause.

In B, the source AMF/SEAF replies to the UDM with the Nudm_UECM_Re-AuthenticationNotification response message. The response message includes the error code REAUTHENTICATION_NOT_ALLOWED for indicating a failure cause.

In C, the source AMF/SEAF replies to the UDM with the Nudm_UECM_Re-AuthenticationNotification response message. The response message includes cause value 4 for indicating that "the UE is performing the handover procedure and the AMF/SEAF will be changed".

Correspondingly, after receiving the Nudm_UECM_Re-AuthenticationNotification response message, the UDM performs the subsequent procedure according to the error indication information carried in the response message.

In A, if the response message includes the sixth error indication information, that is, the error code TEMPORARY_REJECT_HANDOVER_ONGOING, the UDM starts the timer (for example, 1 s) and resends the primary re-authentication request message as in S1307, according to the latest AMF/SEAF registration information of the UE after the timer expires.

In B, if the response message includes the seventh error indication information, that is, the error code REAUTHENTICATION_NOT_ALLOWED, the UDM does not need to perform other operations. That is, the UDM terminates the primary authentication procedure of the UE. If the UDM receives a new AMF registration request subsequently, the UDM may determine, according to the authentication policy of the UDM, whether to start a new primary authentication procedure.

In C, if the response message includes the eighth error indication information, that is, cause value 4 for representing that "the UE is performing the handover procedure and the AMF/SEAF will be changed", the UDM determines the changed target AMF/SEAF and sends the primary re-authentication request message as in S1307 to the target AMF/SEAF after the current handover procedure ends.

In this embodiment of the present application, when the first network element as the network element of the visited network receives the primary re-authentication request sent by the second network element as the network element of the home network for instructing the first network element to perform primary authentication on the UE, the UE is performing the handover procedure, the first network element change event occurs in the handover procedure, and the current first network element is the source first network element in the first network element change event. In this case, the first network element sends the primary re-authentication response message carrying the sixth error indication information, the seventh error indication information, or the eighth error indication information to the second network element. The second network element performs the corresponding operation according to the type of the error indication information carried in the primary re-authentication response message so that the subsequent operation of the network element can be adapted to the state that the UE is performing the handover procedure, preventing the network element of the visited network and the network element of the home network, when performing the primary authentication procedure, from failing to perform the corresponding primary authentication operation in the case of the UE performing the handover procedure and the first network element being changed, thereby achieving the purpose of improving the success rate of the primary authentication procedure of the UE.

In some embodiments, determining the response indication information according to the state of the UE includes the following.

In a case where the state of the UE is that a handover procedure is ongoing and where a first network element change event occurs in the handover procedure, it is determined that the response indication information is the request acknowledgement indication information, where the first network element change event indicates that access of the UE is handed over from a source first network element to a target first network element, and the first network element is the target first network element.

Correspondingly, that the primary re-authentication response message carrying the response indication information is sent to the second network element to enable the second network element to perform the corresponding operation according to the response indication information includes the following.

The primary re-authentication response message carrying the request acknowledgement indication information is sent to the second network element to enable the second network element to perform a primary authentication procedure of the UE according to the request acknowledgement indication information.

It may be understood that in the case where the UE is performing the handover procedure, the first network element change event occurs in the handover procedure, and the current first network element is the target first network element in the first network element change event when the first network element receives the primary re-authentication request message sent by the second network element, the first network element determines that the response indication information is the request acknowledgement indication information and sends the primary re-authentication response message carrying the request acknowledgement indication information to the second network element. That is, the first network element directly confirms the primary re-authentication request of the second network element in the primary re-authentication response message with which the second network element is replied to.

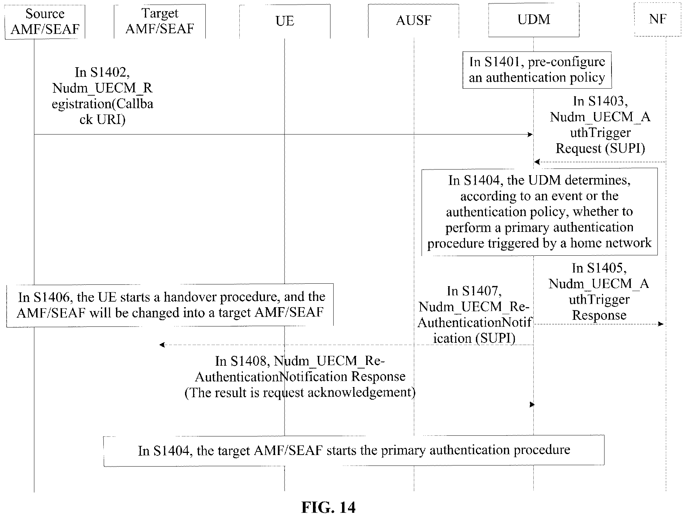

In some embodiments, by way of example, the first network element is an AMF/SEAF network element, and the second network element is a UDM network element. Referring to FIG. 14, FIG. 14 shows a flowchart of a primary authentication method for a UE according to an embodiment of the present application. As shown in FIG. 14, if the UE is performing the handover procedure when the target AMF/SEAF receives the primary re-authentication request message sent by the UDM, the target AMF/SEAF replies to the UDM with the Nudm_UECM_Re-AuthenticationNotification response message and confirms the primary re-authentication request sent by the UDM in the response message.

In this embodiment of the present application, when the first network element as the network element of the visited network receives the primary re-authentication request sent by the second network element as the network element of the home network for instructing the first network element to perform primary authentication on the UE, the UE is performing the handover procedure, the first network element change event occurs in the handover procedure, and the current first network element is the target first network element in the first network element change event. In this case, the first network element confirms the primary authentication request to the second network element so that the subsequent operation of the network element can be adapted to the state that the UE is performing the handover procedure, preventing the network element of the visited network and the network element of the home network, when performing the primary authentication procedure, from failing to perform the corresponding primary authentication operation in the case of the UE performing the handover procedure, thereby achieving the purpose of improving the success rate of the primary authentication procedure of the UE.

Embodiments of the present application further provide a primary authentication method for a UE, and the method is applied to a second network element. Referring to FIG. 4, FIG. 4 is a flowchart of a primary authentication method for a UE according to an embodiment of the present application. As shown in FIG. 4, the primary authentication method for the UE includes, but is not limited to, S401 to S403.

In S401, a primary re-authentication request message carrying a UE identifier is sent to a first network element to enable the first network element to acquire the state of a UE corresponding to the UE identifier according to the UE identifier and determine response indication information according to the state of the UE.

In S402, a primary re-authentication response message sent by the first network element is received, where the primary re-authentication response message carries the response indication information.

In S403, a corresponding operation is performed according to the response indication information.

In this embodiment of the present application, the second network element sends the primary re-authentication request message carrying the UE identifier to the first network element. The first network element acquires the state of the corresponding UE according to the UE identifier and determines the response indication information according to the state of the UE. The second network element receives the primary re-authentication response message carrying the response indication information and sent by the first network element. The second network element performs the corresponding operation according to the response indication information. The operation of the second network element can be adapted to the current state of the UE to achieve the purpose of improving the success rate of the primary authentication process of the UE, thus improving network service quality and user experience.

It is to be noted that for the description, technical effects, and the like of the primary authentication method applied to the second network element provided in this embodiment of the present application, reference may be made to the description of the primary authentication method applied to the first network element provided in the preceding embodiments, which is not repeated here.

In some embodiments, performing the corresponding operation according to the response indication information includes the following:

In a case where the response indication information is request acknowledgement indication information, a primary authentication procedure of the UE is performed.

In some embodiments, performing the corresponding operation according to the response indication information includes the following:

In a case where the response indication information is any one of first error indication information, second error indication information, fifth error indication information, or sixth error indication information, a timer is started, and the primary re-authentication request message is resent according to the latest first network element registration information of the UE after the timer expires.

The first error indication information indicates the state of the UE as that a mobility registration procedure is ongoing.

The second error indication information indicates the state of the UE as that a mobility registration procedure is ongoing and that a first network element change event occurs in the mobility registration procedure.

The fifth error indication information indicates the state of the UE as that a handover procedure is ongoing.

The sixth error indication information indicates the state of the UE as that a handover procedure is ongoing and that a first network element change event occurs in the handover procedure.

In some embodiments, performing the corresponding operation according to the response indication information includes the following:

In a case where the response indication information is third error indication information or seventh error indication information, a primary authentication procedure of the UE is terminated.

The third error indication information indicates the state of the UE as that a mobility registration procedure is ongoing and that a first network element change event occurs in the mobility registration procedure.

The seventh error indication information indicates the state of the UE as that a handover procedure is ongoing and that a first network element change event occurs in the handover procedure.

In some embodiments, performing the corresponding operation according to the response indication information includes the following:

In a case where the response indication information is fourth error indication information or eighth error indication information, a target first network element is determined, and the primary re-authentication response message is sent to the target first network element after the UE ends a mobility registration procedure or a handover procedure.

The fourth error indication information indicates the state of the UE as that a mobility registration procedure is ongoing and that a first network element change event occurs in the mobility registration procedure.

The eighth error indication information indicates the state of the UE as that a handover procedure is ongoing and that a first network element change event occurs in the handover procedure.

In some embodiments, the first network element is an AMF network element or an SEAF network element. The second network element is a UDM network element.

In this embodiment of the present application, in a special scenario where the UE is performing a primary authentication procedure, a mobility registration procedure, or a handover procedure when the first network element receives the primary re-authentication request message sent by the second network element, the first network element determines the response indication information according to the state of the UE and sends the primary re-authentication response information carrying the response indication information to the second network element. The second network element performs the corresponding operation according to the response indication information carried in the primary re-authentication response information, avoiding the situation that authentication fails after the network element of the visited network receives a primary re-authentication request, because the network element of the home network or the network element of the visited network cannot correctly perform the corresponding operation based on a local authentication policy when the UE is in a special state, thereby improving service quality and user experience.

It is to be noted that this embodiment of the present application describes a series of operations performed by the second network element according to various types of response indication information carried in the primary re-authentication response information. For the description and technical effects thereof, reference may be made to the description of a primary authentication method applied to the first network element provided in embodiments of the present application, which is not repeated here.

The primary authentication method for the UE provided in the present application is described hereinafter through embodiments.

### Embodiment one

Embodiment one is a scenario where the AMF already performs primary authentication on a UE when receiving a primary authentication message of the UDM. As shown in FIG. 6, the primary authentication method includes the following.

In S610, the UDM pre-configures an operator authentication policy to determine when to trigger a primary authentication procedure.

In S620, the UE performs network registration. The AMF/SEAF registers the UE with the UDM through Nudm_UECM_registration and provides a callback URI for the UDM.

In S630, an NF (such as the AAnF) determines, according to the operator local authentication policy, whether to send an Nudm_UECM_AuthTrigger request to the UDM so that the UDM service can be used for primary authentication. The Nudm_UECM_AuthTrigger request includes an SUPI of the UE.

In S640, the UDM determines, according to an event (for example, an NF request) or the authentication policy of the UDM, whether to perform the primary authentication procedure triggered by a home network. If different AMF/SEAFs registered in the UDM are used for different access modes, the UDM selects one AMF/SEAF to perform primary authentication. The AMF/SEAF selection criterion depends on the authentication policy of the UDM.

In S650, if the UDM determines, according to the NF request, whether to perform the primary authentication procedure triggered by the home network, the UDM replies to the NF with an Nudm_UECM__AuthTrigger response.

In S660, the UE starts the primary authentication procedure. S660 may occur at any time between the end of S620 and the start of S670.

In S670, the UDM sends an Nudm_UECM_Re-AuthenticationNotification message including the SUPI of the UE to the AMF/SEAF.

In S680, if the AMF/SEAF already performs the primary authentication procedure on the UE when receiving the primary re-authentication request message sent by the UDM, that is, if the state of the UE is that the primary authentication procedure is ongoing, the AMF/SEAF replies with an Nudm_UECM_Re-AuthenticationNotification response message to the UDM and confirms the primary re-authentication request sent by the UDM in the response message.

### Embodiment two

Embodiment two is a scenario where the UE is performing a mobility registration procedure when the AMF receives a primary authentication message of a UDM. As shown in FIG. 7, the primary authentication method includes the following.

In S701, the UDM pre-configures an operator authentication policy to determine when to trigger a primary authentication procedure.

In S702, the UE performs network registration. The AMF/SEAF registers the UE with the UDM through Nudm_UECM_registration and provides a callback URI for the UDM.

In S703, an NF (such as the AAnF) determines, according to the operator local authentication policy, whether to send an Nudm_UECM_AuthTrigger request to the UDM so that the UDM service is used for primary authentication. The Nudm_UECM_AuthTrigger request includes an SUPI of the UE.

In S704, the UDM determines, according to an event (for example, an NF request) or the authentication policy of the UDM, whether to perform the primary authentication procedure triggered by a home network. If different AMF/SEAFs registered in the UDM are used for different access modes, the UDM selects one AMF/SEAF to perform primary authentication. The AMF/SEAF selection criterion depends on the authentication policy of the UDM.

In S705, if the UDM determines, according to the NF request, whether to perform the primary authentication procedure triggered by the home network, the UDM replies to the NF with an Nudm_UECM_AuthTrigger response.

In S706, the UE starts the mobility registration procedure. S706 may occur at any time between the end of S702 and the start of S707.

In S707, the UDM sends an Nudm_UECM_Re-AuthenticationNotification message including the SUPI of the UE to the AMF/SEAF.

In S708, if the UE is performing the mobility registration procedure when the AMF/SEAF receives the primary re-authentication request message sent by the UDM, and whether or not the AMR/SEAF is changed after the UE performs the mobility registration procedure, the AMF/SEAF replies to the UDM with an Nudm_UECM_Re-AuthenticationNotification response message. The response message includes the error code TEMPORARY_REJECT_REGISTRATION_ONGOING for indicating the failure cause or cause value 1 indicating that "the UE is performing the mobility registration procedure".

In S709, when the UDM receives the response message and the response message includes the error code TEMPORARY_REJECT_REGISTRATION_ONGOING for indicating a failure cause or cause value 1 for indicating that "the UE is performing the mobility registration procedure", the UDM starts a timer (for example, 1 s) and resends the primary re-authentication request message as in S707 according to the latest AMF/SEAF registration information of the UE after the timer expires.

In S710, the AMF/SEAF starts the primary authentication procedure.

### Embodiment three

Embodiment three is a scenario where the UE is performing a mobility registration procedure when the AMF receives a primary authentication message of the UDM. Moreover, the AMF is not changed in this scenario. As shown in FIG. 8, the primary authentication method includes the following.

In S801, the UDM pre-configures an operator authentication policy to determine when to trigger a primary authentication procedure.

In S802, the UE performs network registration. The AMF/SEAF registers the UE with the UDM through Nudm_UECM_registration and provides a callback URI for the UDM.

In S803, an NF (such as the AAnF) determines, according to the operator local authentication policy, whether to send an Nudm_UECM_AuthTrigger request to the UDM so that the UDM service can be used for primary authentication. The Nudm_UECM_AuthTrigger request includes an SUPI of the UE.

In S804, the UDM determines, according to an event (for example, an NF request) or the authentication policy of the UDM, whether to perform the primary authentication procedure triggered by a home network. If different AMF/SEAFs registered in the UDM are used for different access modes, the UDM selects one AMF/SEAF to perform primary authentication. The AMF/SEAF selection criterion depends on the authentication policy of the UDM.

In S805, if the UDM determines, according to the NF request, whether to perform the primary authentication procedure triggered by the home network, the UDM replies to the NF with an Nudm_UECM__AuthTrigger response.

In S806, the UE starts the mobility registration procedure. S806 may occur at any time between the end of S802 and the start of S807.

In S807, the UDM sends an Nudm_UECM_Re-AuthenticationNotification message including the SUPI of the UE to the AMF/SEAF.

In S808, if the UE is performing the mobility registration procedure when the AMF/SEAF receives the primary re-authentication request message sent by the UDM, and the AMR/SEAF is not changed after the UE performs the mobility registration procedure, the AMF/SEAF replies to the UDM with an Nudm_UECM_Re-AuthenticationNotification response message and confirms the primary re-authentication request sent by the UDM in the response message.

In S809, the AMF/SEAF starts the primary authentication procedure.

### Embodiment four

Embodiment four is a scenario where the UE is performing a mobility registration procedure when the AMF receives a primary authentication message of the UDM. Moreover, the AMF is changed in this scenario. As shown in FIG. 9, the primary authentication method includes the following.

In S901, the UDM pre-configures an operator authentication policy to determine when to trigger a primary authentication procedure.

In S902, the UE performs network registration. The AMF/SEAF registers the UE with the UDM through Nudm_UECM_registration and provides a callback URI for the UDM.

In S903, an NF (such as the AAnF) determines, according to the operator local authentication policy, whether to send an Nudm_UECM_AuthTrigger request to the UDM so that the UDM service can be used for primary authentication. The Nudm_UECM_AuthTrigger request includes an SUPI of the UE.

In S904, the UDM determines, according to an event (for example, an NF request) or the authentication policy of the UDM, whether to perform the primary authentication procedure triggered by a home network. If different AMF/SEAFs registered in the UDM are used for different access modes, the UDM selects one AMF/SEAF to perform primary authentication. The AMF/SEAF selection criterion depends on the authentication policy of the UDM.

In S905, if the UDM determines, according to the NF request, whether to perform the primary authentication procedure triggered by the home network, the UDM replies to the NF with an Nudm_UECM_AuthTrigger response.

In S906, the UE starts the mobility registration procedure. S906 may occur at any time between the end of S902 and the start of S907.

In S907, the UDM sends an Nudm_UECM_Re-AuthenticationNotification message including the SUPI of the UE to a source AMF/SEAF.

In S908, if the UE is performing the mobility registration procedure when the source AMF/SEAF receives the primary re-authentication request message sent by the UDM, the AMR/SEAF will be changed, and the source AMF/SEAF receives the primary re-authentication request message sent by the UDM, the source AMF/SEAF may perform one of the following.

In A, the source AMF/SEAF replies to the UDM with an Nudm_UECM_Re-AuthenticationNotification response message. The response message includes the error code TEMPORARY_REJECT_REGISTRATION_ONGOING for indicating the failure cause.

In B, the source AMF/SEAF replies to the UDM with an Nudm_UECM_Re-AuthenticationNotification response message. The response message includes the error code REAUTHENTICATION_NOT_ALLOWED for indicating the failure cause.

In C, the source AMF/SEAF replies to the UDM with an Nudm_UECM_Re-AuthenticationNotification response message. The response message includes cause value 2 indicating that "the UE is performing the mobility registration procedure and the AMF/SEAF will be changed".

In S909, after receiving the Nudm_UECM_Re-AuthenticationNotification response message, the UDM performs the subsequent procedure according to the error indication information carried in the response message.

In A, if the response message includes the second error indication information, that is, the error code TEMPORARY_REJECT_REGISTRATION_ONGOING, the UDM starts a timer (for example, 1 s) and resends the primary re-authentication request message as in S907, according to the latest AMF/SEAF registration information of the UE after the timer expires.

In B, if the response message includes third error indication information, that is, the error code REAUTHENTICATION_NOT_ALLOWED, the UDM does not need to perform other operations. That is, the UDM terminates the primary authentication procedure of the UE. If the UDM receives a new AMF registration request subsequently, the UDM may determine, according to the authentication policy of the UDM, whether to start a new primary authentication procedure.

In C, if the response message includes fourth error indication information, that is, cause value 2 for representing that "the UE is performing the mobility registration procedure and the AMF/SEAF will be changed", the UDM determines a changed target AMF/SEAF and sends the primary re-authentication request message in S907 to the target AMF/SEAF after the current mobility registration procedure ends.

In S910, the UDM sends the primary re-authentication request message in S907 to the target AMF/SEAF.

In S911, if the target AMF/SEAF may perform the primary authentication procedure on the UE, the target AMF/SEAF replies to the UDM with the Nudm_UECM_Re-AuthenticationNotification response message and confirms the primary re-authentication request sent by the UDM in the response message.

In S912, the target AMF/SEAF starts the primary authentication procedure.

### Embodiment five

Embodiment five is a scenario where the UE is performing a mobility registration procedure when the AMF receives a primary authentication message of the UDM. Moreover, the AMF is changed in this scenario. As shown in FIG. 10, the primary authentication method includes the following.

In S1001, the UDM pre-configures an operator authentication policy to determine when to trigger a primary authentication procedure.

In S1002, the UE performs network registration. The AMF/SEAF registers the UE with the UDM through Nudm_UECM_registration and provides a callback URI for the UDM.

In S1003, an NF (such as the AAnF) determines, according to the operator local authentication policy, whether to send an Nudm_UECM_AuthTrigger request to the UDM so that the UDM service can be used for primary authentication. The Nudm_UECM_AuthTrigger request includes an SUPI of the UE.

In S1004, the UDM determines, according to an event (for example, an NF request) or the authentication policy of the UDM, whether to perform the primary authentication procedure triggered by a home network. If different AMF/SEAFs registered in the UDM are used for different access modes, the UDM selects one AMF/SEAF to perform primary authentication. The AMF/SEAF selection criterion depends on the authentication policy of the UDM.

In S1005, if the UDM determines, according to the NF request, whether to perform the primary authentication procedure triggered by the home network, the UDM replies to the NF with an Nudm_UECM_AuthTrigger response.

In S1006, the UE starts the mobility registration procedure. S1006 may occur at any time between the end of S1002 and the start of S1007.

In S1007, the UDM sends an Nudm_UECM_Re-AuthenticationNotification message including the SUPI of the UE to a target AMF/SEAF.

In S1008, if the UE is performing the mobility registration procedure when the target AMF/SEAF receives the primary re-authentication request message sent by the UDM, the target AMF/SEAF replies to the UDM with an Nudm_UECM_Re-AuthenticationNotification response message and confirms the primary re-authentication request sent by the UDM in the response message.

In S1009, the target AMF/SEAF starts the primary authentication procedure.

### Embodiment six

Embodiment six is a scenario where the UE is performing a handover procedure when the AMF receives a primary authentication message of the UDM. As shown in FIG. 11, the primary authentication method includes the following.

In S1101, the UDM pre-configures an operator authentication policy to determine when to trigger a primary authentication procedure.

In S1102, the UE performs network registration. The AMF/SEAF registers the UE with the UDM through Nudm_UECM_registration and provides a callback URI for the UDM.

In S1103, an NF (such as the AAnF) determines, according to the operator local authentication policy, whether to send an Nudm_UECM_AuthTrigger request to the UDM so that the UDM service can be used for primary authentication. The Nudm_UECM_AuthTrigger request includes an SUPI of the UE.

In S1104, the UDM determines, according to an event (for example, an NF request) or an authentication policy of the UDM, whether to perform the primary authentication procedure triggered by a home network. If different AMF/SEAFs registered in the UDM are used for different access modes, the UDM selects one AMF/SEAF to perform primary authentication. The AMF/SEAF selection criterion depends on the authentication policy of the UDM.

In S1105, if the UDM determines, according to the NF request, whether to perform the primary authentication procedure triggered by the home network, the UDM replies to the NF with an Nudm_UECM__AuthTrigger response.

In S1106, the UE starts the handover procedure. S1106 may occur at any time between the end of S1102 and the start of S1107.

In S1107, the UDM sends an Nudm_UECM_Re-AuthenticationNotification message including the SUPI of the UE to the AMF/SEAF.

In S1108, if the UE is performing the handover procedure when the AMF/SEAF receives the primary re-authentication request message sent by the UDM, and whether or not the AMR/SEAF is changed after the UE performs the handover procedure, the AMF/SEAF replies to the UDM with an Nudm__UECM_Re-AuthenticationNotification response message. The response message includes the error code TEMPORARY_REJECT_HANDOVER_ONGOING for indicating the failure cause or cause value 3 for indicating that "the UE is performing the handover procedure".

In S1109, when the UDM receives the response message and the response message includes the error code TEMPORARY_REJECT_HANDOVER_ONGOING for indicating a failure cause or cause value 3 for indicating that "the UE is performing the handover procedure", the UDM starts a timer (for example, 1 s) and resends the primary re-authentication request message in S1107 according to the latest AMF/SEAF registration information of the UE after the timer expires.

In S1110, the AMF/SEAF starts the primary authentication procedure.

### Embodiment seven

Embodiment seven is a scenario where the UE is performing a handover procedure when the AMF receives a primary authentication message of the UDM. Moreover, the AMF is not changed in this scenario. As shown in FIG. 12, the primary authentication method includes the following.

In S1201, the UDM pre-configures an operator authentication policy to determine when to trigger a primary authentication procedure.

In S1202, the UE performs network registration. The AMF/SEAF registers the UE with the UDM through Nudm_UECM_registration and provides a callback URI for the UDM.

In S1203, an NF (such as the AAnF) determines, according to the operator local authentication policy, whether to send an Nudm_UECM_AuthTrigger request to the UDM so that the UDM service can be used for primary authentication. The Nudm_UECM_AuthTrigger request includes an SUPI of the UE.

In S1204, the UDM determines, according to an event (for example, an NF request) or the authentication policy of the UDM, whether to perform the primary authentication procedure triggered by a home network. If different AMF/SEAFs registered in the UDM are used for different access modes, the UDM selects one AMF/SEAF to perform primary authentication. The AMF/SEAF selection criterion depends on the authentication policy of the UDM.

In S1205, if the UDM determines, according to the NF request, whether to perform the primary authentication procedure triggered by the home network, the UDM replies to the NF with an Nudm_UECM__AuthTrigger response.

In S1206, the UE starts the handover procedure. S1206 may occur at any time between the end of S1202 and the start of S1207.

In S1207, the UDM sends an Nudm_UECM_Re-AuthenticationNotification message including the SUPI of the UE to the AMF/SEAF.

In S1208, if the UE is performing the handover procedure when the AMF/SEAF receives the primary re-authentication request message sent by the UDM, and the AMR/SEAF is not changed after the UE performs the handover procedure, the AMF/SEAF replies to the UDM with an Nudm_UECM_Re-AuthenticationNotification response message and confirms the primary re-authentication request sent by the UDM in the response message.

In S1209, the AMF/SEAF starts the primary authentication procedure.

### Embodiment eight

Embodiment eight is a scenario where the UE is performing a handover procedure when the AMF receives a primary authentication message of the UDM. Moreover, the AMF is changed in this scenario. As shown in FIG. 13, the primary authentication method includes the following.

In S1301, the UDM pre-configures an operator authentication policy to determine when to trigger a primary authentication procedure.

In S1302, the UE performs network registration. The AMF/SEAF registers the UE with the UDM through Nudm UECMregistration and provides a callback URI for the UDM.

In S1303, an NF (such as the AAnF) determines, according to the operator local authentication policy, whether to send an Nudm_UECM_AuthTrigger request to the UDM so that the UDM service can be used for primary authentication. The Nudm_UECM_AuthTrigger request includes an SUPI of the UE.

In S1304, the UDM determines, according to an event (for example, an NF request) or an authentication policy of the UDM, whether to perform the primary authentication procedure triggered by a home network. If different AMF/SEAFs registered in the UDM are used for different access modes, the UDM selects one AMF/SEAF to perform primary authentication. The AMF/SEAF selection criterion depends on the authentication policy of the UDM.

In S1305, if the UDM determines, according to the NF request, whether to perform the primary authentication procedure triggered by the home network, the UDM replies to the NF with an Nudm_UECM_AuthTrigger response.

In S1306, the UE starts the handover procedure. S1306 may occur at any time between the end of S1302 and the start of S1307.

In S1307, the UDM sends an Nudm_UECM_Re-AuthenticationNotification message including the SUPI of the UE to a source AMF/SEAF.

In S1308, if the UE is performing the mobility registration procedure when the source AMF/SEAF receives the primary re-authentication request message sent by the UDM, the AMR/SEAF will be changed, and the source AMF/SEAF receives the primary re-authentication request message sent by the UDM, the source AMF/SEAF may perform one of the following.

In A, the source AMF/SEAF replies to the UDM with an Nudm_UECM_Re-AuthenticationNotification response message. The response message includes the error code TEMPORARY_REJECT_HANDOVER_ONGOING for indicating the failure cause.

In B, the source AMF/SEAF replies to the UDM with an Nudm_UECM_Re-AuthenticationNotification response message. The response message includes an error code REAUTHENTICATION_NOT_ALLOWED for indicating a failure cause.

In C, the source AMF/SEAF replies to the UDM with an Nudm_UECM_Re-AuthenticationNotification response message. The response message includes cause value 4 for indicating that "the UE is performing the handover procedure and the AMF/SEAF will be changed".

In S1309, after receiving the Nudm_UECM_Re-AuthenticationNotification response message, the UDM performs the subsequent procedure according to the error indication information carried in the response message.

In A, if the response message includes sixth error indication information, that is, the error code TEMPORARY_REJECT_HANDOVER_ONGOING, the UDM starts a timer (for example, 1 s) and resends the primary re-authentication request message as in S1307, according to the latest AMF/SEAF registration information of the UE after the timer expires.

In B, if the response message includes seventh error indication information, that is the error code REAUTHENTICATION_NOT_ALLOWED, the UDM does not need to perform other operations. That is, the UDM terminates the primary authentication procedure of the UE. If the UDM receives a new AMF registration request subsequently, the UDM may determine, according to the authentication policy of the UDM, whether to start a new primary authentication procedure.

In C, if the response message includes eighth error indication information, that is, cause value 4 for representing that "the UE is performing the handover procedure and the AMF/SEAF will be changed", the UDM determines a changed target AMF/SEAF and sends the primary re-authentication request message as in S1307 to the target AMF/SEAF after the current handover procedure ends.

In S1310, the UDM sends the primary re-authentication request message in S1307 to the target AMF/SEAF.

In S1311, if the target AMF/SEAF may perform the primary authentication procedure on the UE, the target AMF/SEAF replies to the UDM with the Nudm_UECM_Re-AuthenticationNotification response message and confirms the primary re-authentication request sent by the UDM in the response message.

In S1312, the target AMF/SEAF starts the primary authentication procedure.

### Embodiment nine

Embodiment nine is a scenario where the UE is performing a handover procedure when the AMF receives a primary authentication message of the UDM. Moreover, the AMF is changed in this scenario. As shown in FIG. 14, the primary authentication method includes the following.

In S1401, the UDM pre-configures an operator authentication policy to determine when to trigger a primary authentication procedure.

In S1402, the UE performs network registration. The AMF/SEAF registers the UE with the UDM through Nudm_UECM_registration and provides a callback URI for the UDM.

In S1403, an NF (such as the AAnF) determines, according to the operator local authentication policy, whether to send an Nudm _UECM_AuthTrigger request to the UDM so that the UDM service can be used for primary authentication. The Nudm_UECM_AuthTrigger request includes an SUPI of the UE.

In S1404, the UDM determines, according to an event (for example, an NF request) or the authentication policy of the UDM, whether to perform the primary authentication procedure triggered by a home network. If different AMF/SEAFs registered in the UDM are used for different access modes, the UDM selects one AMF/SEAF to perform primary authentication. The AMF/SEAF selection criterion depends on the authentication policy of the UDM.

In S1405, if the UDM determines, according to the NF request, whether to perform the primary authentication procedure triggered by the home network, the UDM replies to the NF with an Nudm_UECM_AuthTrigger response.

In S1406, the UE starts the handover procedure. S1406 may occur at any time between the end of S1402 and the start of S 1407.

In S1407, the UDM sends an Nudm_UECM_Re-AuthenticationNotification message including the SUPI of the UE to a target AMF/SEAF.

In S1408, if the UE is performing the handover procedure when the target AMF/SEAF receives the primary re-authentication request message sent by the UDM, the target AMF/SEAF replies to the UDM with an Nudm_UECM_Re-AuthenticationNotification response message and confirms the primary re-authentication request sent by the UDM in the response message.

In S1409, the target AMF/SEAF starts the primary authentication procedure.

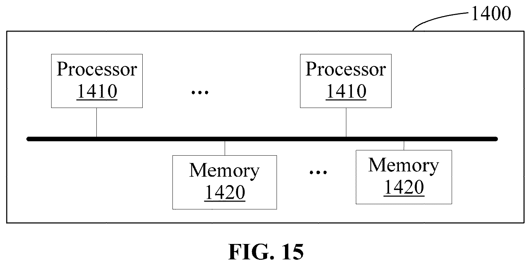

Embodiments of the present application further provide an electronic device. As shown in FIG. 15, the electronic device 1400 includes one or more processors 1410 and a memory 1420. The memory 1420 stores one or more programs. When executed by the one or more processors 1410, the one or more programs cause the one or more processors 1410 to implement a primary authentication method for a UE.

As a non-transitory network system, the memory 1420 may be used for storing a non-transient software program and a non-transient computer-executable program. Additionally, the memory 1420 may include a high-speed random access memory and a non-transient memory, such as at least one disk memory, a flash memory or other non-transient solid-state memories. In some embodiments, the memory 1420 may optionally include memories 1420 which are remotely disposed relative to a processor 1410. These remote memories 1420 may be connected to the processor 1410 via a network. Examples of the network include, but are not limited to, the Internet, an intranet, a local area network, a mobile communication network, and a combination thereof.

The memory 1420 may be implemented in the form of, for example, a read-only memory (ROM), a static storage device, a dynamic storage device, or a random access memory (RAM). The memory 1420 may store an operating system and other application programs. When technical solutions provided in embodiments of the present specification are implemented by software or firmware, the related program codes are stored in the memory 1420 and are called by the processor 1410 to perform the method in embodiments of the present application.

The processor 1410 may be implemented by a general-purpose central processing unit (CPU), a microprocessor, an application specific integrated circuit (ASIC), or one or more integrated circuits and may be used for executing the related program to implement the technical solutions provided in embodiments of the present application.

In some embodiments, the electronic device further includes an input/output interface, a communication interface, and a bus.

The input/output interface is configured to implement information input and output.

The communication interface is configured to implement the communicative interaction between the device and another device through a wired mode (for example, a universal serial bus (USB) or a network cable) or a wireless mode (for example, a mobile network, WIFI, or Bluetooth).

Information is transmitted through the bus between various components (for example, the processor 1410, the memory 1420, the input/output interface, and the communication interface).

The processor 1410, the memory 1420, the input/output interface, and the communication interface may be connected communicatively to each other inside the device through the bus.

An embodiment of the present application further provides a computer-readable storage medium for storing a computer-executable instruction for performing a primary authentication method for a UE applied to a first network element or a primary authentication method for a UE applied to a second network element.

An embodiment of the present application also provides a computer program product including a computer program or computer instruction stored in the computer-readable storage medium. A processor of a computer device reads the computer program or the computer instruction from the computer-readable storage medium and executes the computer program or the computer instruction so that the computer device performs a primary authentication method for a UE applied to a first network element or a primary authentication method for a UE applied to a second network element.

According to the primary authentication method for the UE, the electronic device, and the storage medium provided in embodiments of the present application, a first network element receives a primary re-authentication request message sent by a second network element, where the primary re-authentication request message carries a UE identifier; the first network element determines a UE according to the UE identifier and acquires the state of the UE according to the UE identifier; then the first network element determines response indication information according to the state of the UE and sends a primary re-authentication response message to the second network element, where the primary re-authentication response message carries the response indication information; and the second network element performs a corresponding operation according to the response indication information. In this manner, the operation of the second network element can be adapted to the current state of the UE, achieving the purpose of improving the success rate of the primary authentication process of the UE, thus improving network service quality and user experience.

The system architecture and application scenarios described in embodiments of the present application are intended to more clearly explain the technical solutions of embodiments of the present application and do not limit the technical solutions provided in embodiments of the present application. It can be seen by those skilled in the art that with the evolution of the system architecture and the emergence of new application scenarios, the technical solutions provided in embodiments of the present application are equally applicable to similar technical problems.

It may be understood by those of ordinary skill in the art that all or part of the procedure steps in the preceding method embodiments may be implemented by related hardware instructed by a computer program. The computer program may be stored in a nonvolatile computer-readable storage medium. During the execution of the computer program, the procedure steps in the preceding method embodiments may be implemented. Any reference to the memory, storage, database, or another medium used in embodiments of the present application may include a non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of illustration and not limitation, the RAM is available in various forms, for example, a static RAM (SRAM), a dynamic RAM (DRAM), a synchronous DRAM (SDRAM), a dual data rate SDRAM (DDRSDRAM), an enhanced SDRAM (ESDRAM), a Synchlink DRAM (SLDRAM), a Rambus direct RAM (RDRAM), or a direct memory bus dynamic RAM (DRRAM).

It is to be understood by those having ordinary skill in the art that some or all steps of the preceding method and the preceding system may be implemented as software, firmware, hardware and suitable combinations thereof. Some or all physical components may be implemented as software executed by a processor such as a central processing unit, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage medium includes, but is not limited to, a RAM, a ROM, an EEPROM, a flash memory or other memory technologies, a compact disc read-only memory (CD-ROM), a digital versatile disc (DVD) or other optical disc storage, a magnetic cassette, a magnetic tape, a magnetic disk storage or other magnetic storage devices, or any other medium used for storing desired information and accessed by a computer. Additionally, as is known to those having ordinary skill in the art, the communication media generally include computer-readable instructions, data structures, program modules, or other data in carriers or in modulated data signals transported in other transport mechanisms and may include any information delivery medium.

Some embodiments of the present application are described above with reference to the drawings and are not intended to limit the scope of the claims of the present application. Any modifications, equivalent substitutions, and improvements made by those skilled in the art without departing from the scope and substantive content of the present application fall within the scope of the present application.

## Claims

1. A primary authentication method for a user equipment (UE), the method being applied to a first network element and comprising:
receiving a primary re-authentication request message sent by a second network element, wherein the primary re-authentication request message carries a UE identifier;
acquiring a state of a UE corresponding to the UE identifier according to the UE identifier;
determining response indication information according to the state of the UE; and
sending a primary re-authentication response message carrying the response indication information to the second network element to enable the second network element to perform a corresponding operation according to the response indication information.

2. The primary authentication method according to claim 1, wherein determining the response indication information according to the state of the UE comprises:
in response to the state of the UE being that a primary authentication procedure is ongoing, determining that the response indication information is request acknowledgement indication information; and
sending the primary re-authentication response message carrying the response indication information to the second network element to enable the second network element to perform the corresponding operation according to the response indication information comprises:
sending the primary re-authentication response message carrying the request acknowledgement indication information to the second network element to enable the second network element to perform the primary authentication procedure of the UE according to the request acknowledgement indication information.

3. The primary authentication method according to claim 1, wherein determining the response indication information according to the state of the UE comprises:
in response to the state of the UE being that a mobility registration procedure is ongoing, determining that the response indication information is first error indication information; and
sending the primary re-authentication response message carrying the response indication information to the second network element to enable the second network element to perform the corresponding operation according to the response indication information comprises:
sending the primary re-authentication response message carrying the first error indication information to the second network element to enable the second network element to start a timer according to the first error indication information and resend the primary re-authentication request message according to latest first network element registration information of the UE after the timer expires.

4. The primary authentication method according to claim 1, wherein determining the response indication information according to the state of the UE comprises:
in response to the state of the UE being that a mobility registration procedure is ongoing and the first network element being unchanged in the mobility registration procedure, determining that the response indication information is request acknowledgement indication information; and
sending the primary re-authentication response message carrying the response indication information to the second network element to enable the second network element to perform the corresponding operation according to the response indication information comprises:
sending the primary re-authentication response message carrying the request acknowledgement indication information to the second network element to enable the second network element to perform a primary authentication procedure of the UE according to the request acknowledgement indication information.

5. The primary authentication method according to claim 1, wherein determining the response indication information according to the state of the UE comprises:
in response to the state of the UE being that a mobility registration procedure is ongoing and a first network element change event occurring in the mobility registration procedure, determining that the response indication information is second error indication information, third error indication information, or fourth error indication information, wherein the first network element change event indicates that access of the UE is handed over from a source first network element to a target first network element, and the first network element is the source first network element; and
sending the primary re-authentication response message carrying the response indication information to the second network element to enable the second network element to perform the corresponding operation according to the response indication information comprises one of:
sending the primary re-authentication response message carrying the second error indication information to the second network element to enable the second network element to start a timer according to the second error indication information and resend the primary re-authentication request message according to latest first network element registration information of the UE after the timer expires;
sending the primary re-authentication response message carrying the third error indication information to the second network element to enable the second network element to terminate a primary authentication procedure of the UE according to the third error indication information; or
sending the primary re-authentication response message carrying the fourth error indication information to the second network element to enable the second network element to determine the target first network element according to the fourth error indication information and send the primary re-authentication response message to the target first network element after the mobility registration procedure ends.

6. The primary authentication method according to claim 1, wherein determining the response indication information according to the state of the UE comprises:
in response to the state of the UE being that a mobility registration procedure is ongoing and a first network element change event occurring in the mobility registration procedure, determining that the response indication information is request acknowledgement indication information, wherein the first network element change event indicates that access of the UE is handed over from a source first network element to a target first network element, and the first network element is the target first network element; and
sending the primary re-authentication response message carrying the response indication information to the second network element to enable the second network element to perform the corresponding operation according to the response indication information comprises:
sending the primary re-authentication response message carrying the request acknowledgement indication information to the second network element to enable the second network element to perform a primary authentication procedure of the UE according to the request acknowledgement indication information.

7. The primary authentication method according to claim 1, wherein determining the response indication information according to the state of the UE comprises:
in response to the state of the UE being that a handover procedure is ongoing, determining that the response indication information is fifth error indication information; and
sending the primary re-authentication response message carrying the response indication information to the second network element to enable the second network element to perform the corresponding operation according to the response indication information comprises:
sending the primary re-authentication response message carrying the fifth error indication information to the second network element to enable the second network element to start a timer according to the fifth error indication information and resend the primary re-authentication request message according to latest first network element registration information of the UE after the timer expires.

8. The primary authentication method according to claim 1, wherein determining the response indication information according to the state of the UE comprises:
in response to the state of the UE being that a handover procedure is ongoing and the first network element being unchanged in the handover procedure, determining that the response indication information is request acknowledgement indication information; and
sending the primary re-authentication response message carrying the response indication information to the second network element to enable the second network element to perform the corresponding operation according to the response indication information comprises:
sending the primary re-authentication response message carrying the request acknowledgement indication information to the second network element to enable the second network element to perform a primary authentication procedure of the UE according to the request acknowledgement indication information.

9. The primary authentication method according to claim 1, wherein determining the response indication information according to the state of the UE comprises:
in response to the state of the UE being that a handover procedure is ongoing and a first network element change event occurring in the handover procedure, determining that the response indication information is sixth error indication information, seventh error indication information, or eighth error indication information, wherein the first network element change event indicates that access of the UE is handed over from a source first network element to a target first network element, and the first network element is the source first network element; and
sending the primary re-authentication response message carrying the response indication information to the second network element to enable the second network element to perform the corresponding operation according to the response indication information comprises one of:
sending the primary re-authentication response message carrying the sixth error indication information to the second network element to enable the second network element to start a timer according to the sixth error indication information and resend the primary re-authentication request message according to latest first network element registration information of the UE after the timer expires;
sending the primary re-authentication response message carrying the seventh error indication information to the second network element to enable the second network element to terminate a primary authentication procedure of the UE according to the seventh error indication information; or
sending the primary re-authentication response message carrying the eighth error indication information to the second network element to enable the second network element to determine the target first network element according to the eighth error indication information and send the primary re-authentication response message to the target first network element after the handover procedure ends.

10. The primary authentication method according to claim 1, wherein determining the response indication information according to the state of the UE comprises:
in response to the state of the UE being that a handover procedure is ongoing and a first network element change event occurring in the handover procedure, determining that the response indication information is request acknowledgement indication information, wherein the first network element change event indicates that access of the UE is handed over from a source first network element to a target first network element, and the first network element is the target first network element; and
sending the primary re-authentication response message carrying the response indication information to the second network element to enable the second network element to perform the corresponding operation according to the response indication information comprises:
sending the primary re-authentication response message carrying the request acknowledgement indication information to the second network element to enable the second network element to perform a primary authentication procedure of the UE according to the request acknowledgement indication information.

11. The primary authentication method according to any one of claims 1 to 10, wherein the first network element is an access and mobility management function (AMF) network element or a security anchor function (SEAF) network element, and the second network element is a unified data management (UDM) network element.

12. A primary authentication method for a user equipment (UE), the method being applied to a second network element and comprising:
sending a primary re-authentication request message carrying a UE identifier to a first network element to enable the first network element to acquire a state of a UE corresponding to the UE identifier according to the UE identifier and determine response indication information according to the state of the UE;
receiving a primary re-authentication response message sent by the first network element, wherein the primary re-authentication response message carries the determination response indication information; and
performing a corresponding operation according to the response indication information.

13. The primary authentication method according to claim 12, wherein performing the corresponding operation according to the response indication information comprises:
in response to the response indication information being request acknowledgement indication information, performing a primary authentication procedure of the UE.

14. The primary authentication method according to claim 12, wherein performing the corresponding operation according to the response indication information comprises:
in response to the response indication information being any one of first error indication information, second error indication information, fifth error indication information, or sixth error indication information, starting a timer and resending the primary re-authentication request message according to latest first network element registration information of the UE after the timer expires, wherein
the first error indication information indicates the state of the UE as that a mobility registration procedure is ongoing;
the second error indication information indicates the state of the UE as that a mobility registration procedure is ongoing and that a first network element change event occurs in the mobility registration procedure;
the fifth error indication information indicates the state of the UE as that a handover procedure is ongoing; and
the sixth error indication information indicates the state of the UE as that a handover procedure is ongoing and that a first network element change event occurs in the handover procedure.

15. The primary authentication method according to claim 12, wherein performing the corresponding operation according to the response indication information comprises:
in response to the response indication information being third error indication information or seventh error indication information, terminating a primary authentication procedure of the UE, wherein
the third error indication information indicates the state of the UE as that a mobility registration procedure is ongoing and that a first network element change event occurs in the mobility registration procedure; and
the seventh error indication information indicates the state of the UE as that a handover procedure is ongoing and that a first network element change event occurs in the handover procedure.

16. The primary authentication method according to claim 12, wherein performing the corresponding operation according to the response indication information comprises:
in response to the response indication information being fourth error indication information or eighth error indication information, determining a target first network element and sending the primary re-authentication response message to the target first network element after a mobility registration procedure of the UE or a handover procedure of the UE ends, wherein
the fourth error indication information indicates the state of the UE as that the mobility registration procedure is ongoing and that a first network element change event occurs in the mobility registration procedure; and
the eighth error indication information indicates the state of the UE as that the handover procedure is ongoing and that the first network element change event occurs in the handover procedure.

17. The primary authentication method according to any one of claims 12 to 16, wherein the first network element is an access and mobility management function (AMF) network element or a security anchor function (SEAF) network element, and the second network element is a unified data management (UDM) network element.

18. An electronic device, comprising:
at least one processor; and
a memory, wherein the memory stores at least one program; and when executed by the at least one processor, the at least one program causes the at least one processor to implement the primary authentication method for a user equipment (UE) according to any one of claims 1 to 11, or the primary authentication method for a UE according to any one of claims 12 to 17.

19. A computer-readable storage medium for storing a computer program, wherein when the computer program is executed by a processor, the processor implements the primary authentication method for a user equipment (UE) according to any one of claims 1 to 11, or the primary authentication method for a UE according to any one of claims 12 to 17.
